# FASCICULE DE BREVET EUROPEEN

(11) **EP 3 549 352 B1**
(45) Date de publication et mention de la délivrance du brevet: **29.12.2021**
(21) Numéro de dépôt: 17823041.3
(22) Date de dépôt: 28.11.2017
(51) Int. Cl.: H04Q 9/00, H04B 3/54, H04W 40/02

(54) **COMPTEUR ÉLECTRIQUE COMPORTANT UNE INTERFACE PAR COURANTS PORTEURS EN LIGNE ET AU MOINS UNE INTERFACE RADIO FRÉQUENCE**
ELEKTRIZITÄTSZÄHLER MIT EINEM STROMLEITUNGSSCHNITSTELLE UND ZUMINDEST EINEM RADIOFREQUENZSCHNITSTELLE.
ELECTRICITY METERING DEVICE COMPRISING A POWERLINE INTERFACE AND AT LEAST A RADIOFREQUENCY INTERFACE.

(30) Priorité: 30.11.2016 FR 1661694
(43) Date de publication de la demande: 09.10.2019
(73) Titulaire: Sagemcom Energy & Telecom SAS, 92500 Rueil-Malmaison (FR)
(72) Inventeur: TEBOULLE, Henri, 92500 Rueil Malmaison (FR); RAZAZIAN, Kaveh, 92500 Rueil Malmaison (FR); ROTER, Ziv, 92500 Rueil Malmaison (FR); VERNET, Thierry, 92500 Rueil Malmaison (FR)
(74) Mandataire: Cabinet Le Guen Maillet
(86) Numéro de dépôt international: PCT/EP2017/080693
(87) Numéro de publication internationale: WO 2018/099917

(56) Documents cités:
- EP-A1- 2 840 860
- WO-A1-2010/122163
- WO-A2-2012/075496
- GB-A- 2 529 736

## Description

La présente invention concerne une connexion d'un compteur électrique intelligent, comportant une interface de communication par courants porteurs en ligne et au moins une interface de communication radio fréquence à un système comportant un réseau de communication par courants porteurs en ligne avec protocole de routage réactif.

Les réseaux de communication par courants porteurs en ligne (« PowerLine Communications » en anglais) pour des systèmes de type AMM (« Automated Meter Management » en anglais) ont fait leur apparition ces dernières années. On peut par exemple citer le standard G3-PLC spécifié dans la recommandation ITU-T G.9903. Dans de tels réseaux de communication par courants porteurs en ligne, des communications sont établies entre des compteurs électriques, dits *compteurs électriques intelligents* (« smart electrical meters » en anglais), et un dispositif central, parfois appelé *nœud de base* (« base node » en anglais) ou *coordinateur* (« coordinator » en anglais), pour permettre notamment une relève automatisée à distance de mesures de consommation électrique effectuées par lesdits compteurs électriques intelligents. Plusieurs nœuds de base sont alors géographiquement déployés pour répartir la charge de collecte de relevés de comptage des compteurs électriques intelligents. Chaque nœud de base sert alors de relais entre les compteurs électriques intelligents et une entité de gestion du système de type AMM.

De telles communications par courants porteurs en ligne doivent faire face à des interférences liées à des phénomènes de diaphonie, et/ou à un manque de fiabilité de certains liens de communication dans le réseau de communication par courants porteurs en ligne (*e*.*g*. limite de portée due à la longueur des câbles), et/ou à des bruits de différentes natures (bruits blancs, bruits colorés, bruits impulsionnels principalement), et/ou à des désadaptations d'impédance. Pour rappel, la diaphonie est un phénomène qui permet à des signaux, typiquement par couplage capacitif, de se propager sans passer par des paires de cuivre proprement dites, mais par des liens parasites non visibles. Ce phénomène est instable, car pouvant varier en fonction de la température ou de l'activité sur le réseau de communication par courants porteurs en ligne. A noter qu'il peut également y avoir de la diaphonie au sein d'un même appareil via des liaisons cuivre sur circuits imprimés et/ou via certains composants qui constituent ledit appareil. Ces phénomènes peuvent entraîner des ruptures de liens de communication et entraîner des déconnexions de nœuds du réseau de communication. Une telle instabilité des réseaux de communication par courants porteurs en ligne peut être compensée en utilisant un réseau de communication complémentaire, comme par exemple un réseau de communication Radio Fréquence (RF), destiné à suppléer le réseau de communication par courants porteurs en ligne dans le cas où ce dernier s'avérerait inopérant. Une infrastructure réseau complémentaire est alors déployée pour permettre à l'entité de gestion du système de type AMM de récupérer les relevés de comptage des compteurs électriques intelligents. La convergence de données s'effectue alors au niveau de l'entité de gestion du système de type AMM.

Le déploiement de cette infrastructure réseau complémentaire est toutefois chronophage, et nécessite une mobilisation conséquente de ressources (quantité de dispositifs pour créer l'infrastructure, temps d'installation, etc.).

Voir aussi les publications WO2012/075496 et GB2529736.

Il est souhaitable de pallier ces inconvénients de l'état de la technique, et notamment de permettre à un compteur électrique intelligent, comportant une interface de communication par courants porteurs en ligne et au moins une interface de communication radio fréquence, de se connecter au système, et ce, de manière transparente vis-à-vis d'un dispositif de gestion centralisée du système.

L'invention concerne un procédé de connexion d'un compteur électrique intelligent à un système comportant un réseau de communication par courants porteurs en ligne avec protocole de routage réactif pour mettre en contact des nœuds du système et un dispositif de gestion centralisée du système auprès duquel des compteurs électriques intelligents qui sont des nœuds du système doivent être enregistrés, chaque chemin entre un dit nœud du système et le dispositif de gestion centralisée consistant en un lien ou un ensemble de liens, chaque lien étant associé à un coût de route. Le système comporte au moins une passerelle comportant une interface de communication par courants porteurs en ligne pour communiquer via le réseau de communication par courants porteurs en ligne et au moins une interface de communication radio fréquence. Un compteur électrique intelligent cherchant à se connecter au système et comportant aussi une interface de communication par courants porteurs en ligne et au moins une interface de communication radio fréquence effectue une phase d'enregistrement comportant les étapes suivantes : diffuser sur chacune de ses interfaces de communication un message de requête d'annonce ; après réception d'un ou plusieurs messages d'annonce en réponse au message de requête d'annonce de la part respectivement d'un ou plusieurs voisins dans le système, sélectionner un agent relais, l'agent relais étant le voisin dans le système présentant le plus faible coût de route pour joindre le dispositif de gestion centralisée, chaque message d'annonce incluant une information de coût de route entre le voisin ayant émis ledit message d'annonce et le dispositif de gestion centralisée ; et effectuer une demande d'enregistrement dudit compteur électrique intelligent auprès du dispositif de gestion centralisée, en utilisant l'agent relais sélectionné comme mandataire via l'interface de communication par laquelle l'agent relais a envoyé le message d'annonce ayant permis d'obtenir ledit plus faible coût de route. De plus, les coûts de route de liens s'appuyant sur des interfaces de communication par courants porteurs en ligne et de liens de communication par radio fréquence sont définis de manière cohérente entre eux. Et, après enregistrement dudit compteur électrique intelligent, le routage de messages en provenance ou à destination dudit compteur électrique intelligent s'effectue dans le système au niveau de la couche liaison du modèle OSI. Ainsi, en utilisant l'agent relais comme mandataire pour la phase d'enregistrement et en agissant au niveau de la couche liaison pour le routage, un compteur électrique intelligent qui comporte une interface de communication par courants porteurs en ligne et au moins une interface de communication radio fréquence, peut se connecter au système, et ce, de manière transparente vis-à-vis du dispositif de gestion centralisée.

Selon un mode de réalisation particulier, après enregistrement dudit compteur électrique intelligent, une procédure de recherche de route par diffusions successives est effectuée entre le dispositif de gestion centralisée et ledit compteur électrique intelligent afin de mettre à jour des tables locales de routage au niveau de la couche liaison du modèle OSI, et, lorsque l'interface de communication par laquelle l'agent relais a envoyé le message d'annonce ayant permis d'obtenir ledit plus faible coût de route est une interface de communication radio fréquence, l'agent relais inscrit dans sa table locale de routage au niveau de la couche liaison du modèle OSI que le routage des messages en provenance ou à destination dudit compteur électrique intelligent s'effectue via ladite interface de communication radio fréquence.

Selon un mode de réalisation particulier, la couche liaison du modèle OSI de chaque passerelle est décomposée en un ensemble de sous-couches de contrôle d'accès au medium spécifiques auxdites interfaces de communication de ladite passerelle et une sous-couche d'adaptation interfaçant la couche réseau du modèle OSI avec les sous-couches de contrôle d'accès au medium, le routage de messages dans le système étant effectué par ladite passerelle au niveau de la sous-couche d'adaptation.

Selon un mode de réalisation particulier, chacune des sous-couches de contrôle d'accès au medium implémente un même mécanisme de contrôle d'accès au medium permettant de communiquer entre voisins, un mécanisme de fragmentation et de réassemblage de paquets, un mécanisme de répétition automatique de requête et un mécanisme d'écoute continue du medium quand ladite passerelle n'émet pas sur le medium concerné.

Selon un mode de réalisation particulier, le routage de messages dans le système effectué par la sous-couche d'adaptation est conforme au protocole 6LoWPAN.

Selon un mode de réalisation particulier, lorsque ledit compteur électrique intelligent est enregistré dans le système et lorsqu'en outre l'interface de communication par laquelle l'agent relais a envoyé le message d'annonce ayant permis d'obtenir ledit plus faible coût de route est l'interface de communication par courants porteurs en ligne, ledit compteur électrique intelligent prend le rôle de passerelle dans le système.

Selon un mode de réalisation particulier, lorsque ledit compteur électrique intelligent est enregistré dans le système et lorsqu'en outre l'interface de communication par laquelle l'agent relais a envoyé le message d'annonce ayant permis d'obtenir ledit plus faible coût de route est une dite interface de communication radio fréquence, ledit compteur électrique intelligent ne répond pas à d'éventuels messages de requête d'annonce en provenance d'autres compteurs électriques intelligents.

Selon un mode de réalisation particulier, lorsqu'en outre l'interface de communication par laquelle l'agent relais a envoyé le message d'annonce ayant permis d'obtenir ledit plus faible coût de route est une dite interface de communication radio fréquence, ledit compteur électrique intelligent met en place avec l'agent relais un premier mécanisme de surveillance consistant à échanger, via ladite interface de communication radio fréquence, des messages de vérification de connectivité radio, et ledit compteur électrique intelligent ré-initie la phase d'enregistrement lorsque le premier mécanisme de surveillance montre une perte de connectivité radio.

Selon un mode de réalisation particulier, lorsqu'en outre l'interface de communication par laquelle l'agent relais a envoyé le message d'annonce ayant permis d'obtenir ledit plus faible coût de route est une dite interface de communication radio fréquence, ledit compteur électrique intelligent met en place avec l'agent relais un second mécanisme de surveillance consistant à échanger avec le dispositif de gestion centralisée des messages d'indication de présence et/ou d'autres messages applicatifs, et ledit compteur électrique intelligent ré-initie la phase d'enregistrement lorsque le second mécanisme de surveillance montre une perte de contact avec le dispositif de gestion centralisée.

L'invention concerne également un compteur électrique intelligent destiné à être utilisé dans un système comportant un réseau de communication par courants porteurs en ligne avec protocole de routage réactif pour mettre en contact des nœuds du système et un dispositif de gestion centralisée du système auprès duquel des compteurs électriques intelligents qui sont des nœuds du système doivent être enregistrés, chaque chemin entre un dit nœud du système et le dispositif de gestion centralisée consistant en un lien ou un ensemble de liens, chaque lien étant associé à un coût de route. Le système comporte au moins une passerelle comportant une interface de communication par courants porteurs en ligne pour communiquer via le réseau de communication par courants porteurs en ligne et au moins une interface de communication radio fréquence. Ledit compteur électrique intelligent, cherchant à se connecter au système et comportant aussi une interface de communication par courants porteurs en ligne et au moins une interface de communication radio fréquence, comporte des moyens pour effectuer une phase d'enregistrement comportant : des moyens pour diffuser sur chacune de ses interfaces de communication un message de requête d'annonce ; des moyens pour, après réception d'un ou plusieurs messages d'annonce en réponse au message de requête d'annonce de la part respectivement d'un ou plusieurs voisins dans le système, sélectionner un agent relais, l'agent relais étant le voisin dans le système présentant le plus faible coût de route pour joindre le dispositif de gestion centralisée, chaque message d'annonce incluant une information de coût de route entre le voisin ayant émis ledit message d'annonce et le dispositif de gestion centralisée ; et des moyens pour effectuer une demande d'enregistrement dudit compteur électrique intelligent auprès du dispositif de gestion centralisée, en utilisant l'agent relais sélectionné comme mandataire via l'interface de communication par laquelle l'agent relais a envoyé le message d'annonce ayant permis d'obtenir ledit plus faible coût de route. De plus, les coûts de route de liens s'appuyant sur des interfaces de communication par courants porteurs en ligne et de liens de communication par radio fréquence sont définis de manière cohérente entre eux. Et, après enregistrement dudit compteur électrique intelligent, le routage de messages en provenance ou à destination dudit compteur électrique intelligent s'effectue au niveau de la couche liaison du modèle OSI.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter l'un ou l'autre des procédés mentionnés ci-dessus dans l'un quelconque de leurs modes de réalisation, lorsque ledit programme est exécuté par le processeur. L'invention concerne également un support de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un système de communication dans le cadre d'une gestion automatisée à distance de compteurs électriques intelligents ;
- la Fig. 1B illustre schématiquement un autre système de communication dans le cadre de la gestion automatisée à distance de compteurs électriques intelligents ;
- la Fig. 2 illustre schématiquement un exemple d'architecture matérielle de dispositif de communication du système de la Fig. 1A et/ou de la Fig. 1B ;
- la Fig. 3 illustre schématiquement un algorithme, exécuté par un compteur électrique intelligent, pour sélectionner un agent relais dans le système de la Fig. 1A et/ou de la Fig. 1B ;
- la Fig. 4A illustre schématiquement un premier algorithme, exécuté par une passerelle du système de la Fig. 1A et/ou de la Fig. 1B, pour répondre à une requête d'annonce ;
- la Fig. 4B illustre schématiquement un second algorithme, exécuté par ladite passerelle du système de la Fig. 1A et/ou de la Fig. 1B, pour répondre à une autre requête d'annonce ;
- la Fig. 5A illustre schématiquement un algorithme, exécuté par ladite passerelle du système de la Fig. 1A, pour traiter un message de requête d'enregistrement ;
- la Fig. 5B illustre schématiquement un algorithme, exécuté par ladite passerelle du système de la Fig. 1A, pour traiter un message de réponse à ladite requête d'enregistrement ;
- la Fig. 6A illustre schématiquement un algorithme, exécuté par ladite passerelle du système de la Fig. 1A, pour traiter un message en voie montante après d'enregistrement dudit compteur électrique intelligent ;
- la Fig. 6B illustre schématiquement un algorithme, exécuté par ladite passerelle du système de la Fig. 1A, pour traiter un message en voie descendante après d'enregistrement dudit compteur électrique intelligent ;
- la Fig. 7 illustre schématiquement une portion de pile de communication utilisée dans le système de la Fig. 1A et/ou de la Fig. 1B ; et
- les Figs. 8A à 8F illustrent schématiquement des formats de messages utilisés dans le système de la Fig. 1A et/ou de la Fig. 1B.

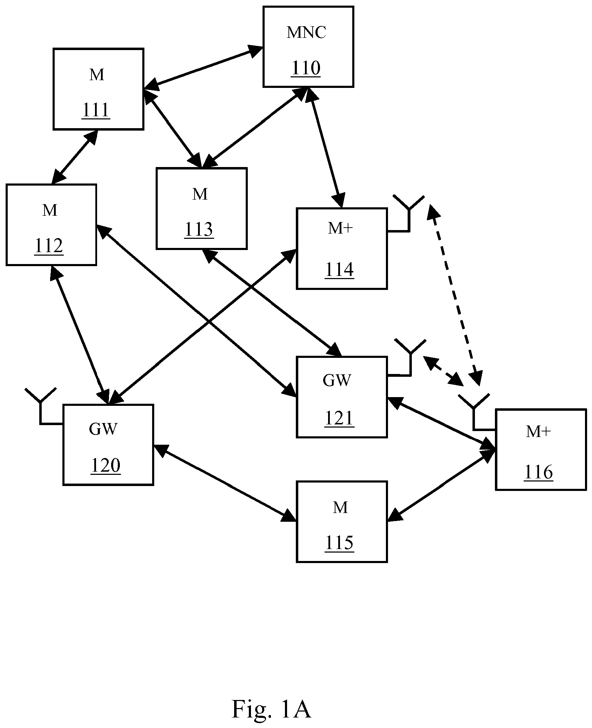

La Fig. 1A illustre schématiquement un système de communication dans le cadre d'une gestion automatisée à distance de compteurs électriques intelligents.

Le système représenté sur la Fig. 1A comporte un réseau de communication par Courants Porteurs en Ligne (représenté par des flèches pleines) destiné à interconnecter des compteurs électriques intelligents et leur permettre de communiquer avec un nœud de base, appelé ici dispositif MNC (« Multimedia Networking Coordinator » en anglais) 110, pour lui transmettre notamment des relevés de comptage. Le terme « Multimedia » dans ce contexte est à prendre dans son étymologie voulant dire « plusieurs moyens de relier ». Le réseau de communication par Courants Porteurs en Ligne est maillé, ce qui permet à un même compteur électrique intelligent de disposer potentiellement de plusieurs chemins pour atteindre le dispositif MNC 110, et vice versa. Dans un tel réseau maillé, certains nœuds servent alors de relais pour permettre à un ou plusieurs autres nœuds de communiquer avec le dispositif MNC 110. On entend par *nœud* tout dispositif apte à être inclus dans le système afin de communiquer avec d'autres dispositifs du système.

Le dispositif MNC 110 est en charge de gérer le réseau de communication par Courants Porteurs en Ligne. Le dispositif MNC 110 est en charge d'attribuer des adresses de couche liaison à chaque nœud du système, afin de permettre audit nœud de communiquer au sein du système. Le dispositif MNC 110 joue donc le rôle de dispositif de gestion centralisée du système.

Le réseau de communication par Courants Porteurs en Ligne s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, un protocole de routage de type réactif s'appuie sur des découvertes de routes à la demande, chaque nœud du réseau n'ayant besoin d'avoir connaissance que de ses propres voisins (*i.e.* les nœuds avec lesquels ledit nœud du réseau peut communiquer directement, sans relais par un autre nœud du réseau). Dans le cadre des technologies de communication par Courants Porteurs en Ligne, le protocole de routage utilisé dans le standard G3-PLC est de type réactif, alors que celui utilisé dans les spécifications PRIME (« PoweRline Intelligent Metering Evolution » en anglais) est de type proactif.

Le système représenté sur la Fig. 1A comporte une pluralité de compteurs électriques intelligents. Certains compteurs électriques intelligents peuvent ne comporter qu'une seule interface de communication, de type Courants Porteurs en Ligne, pour permettre de communiquer avec le dispositif MNC 110. Ce sont les compteurs électriques intelligents M 111, 112, 113, 115 sur la Fig. 1A. Certains compteurs électriques intelligents peuvent comporter une interface de communication par Courants Porteurs en Ligne, ainsi qu'au moins une autre interface de communication Radio Fréquence, pour permettre de communiquer avec le dispositif MNC 110. Ce sont les compteurs électriques intelligents M+ 114, 116 sur la Fig. 1A.

Le système représenté sur la Fig. 1A peut comporter une ou plusieurs passerelles GW 120, 121. Comme les compteurs électriques intelligents M+ 114, 116, les passerelles GW 120, 121 comportent une interface de communication par Courants Porteurs en Ligne, ainsi qu'au moins une autre interface de communication, Radio Fréquence. Ces passerelles GW 120, 121 n'ont pas de fonction de comptage, mais sont destinées à permettre de faire le relais entre le réseau de communication par Courants Porteurs en Ligne et un compteur électrique intelligent, tel que le compteur électrique intelligent M 116, communiquant via une interface de communication Radio Fréquence (comme représenté par des flèches en pointillés sur la Fig. 1A). Les passerelles GW peuvent s'adapter à un réseau par Courants Porteurs en Ligne existant, ce qui signifie qu'il n'y a pas besoin de changer un nœud existant dudit réseau pour y introduire les fonctions réalisées par ces passerelles GW.

Une fois enregistré dans le système et connecté via son interface de communication par Courants Porteurs en Ligne, chaque compteur électrique intelligent M+, tel que le compteur électrique intelligent M+ 114, peut aussi faire le relais entre le réseau de communication par Courants Porteurs en Ligne et un autre compteur électrique intelligent communiquant via une interface de communication Radio Fréquence. Le compteur électrique intelligent M+ 114 a ainsi adopté le rôle de passerelle dans le système. Outre la question de la fonction de comptage, une différence entre les passerelles GW 120, 121 et les compteurs électriques intelligents M+ 114, 116 réside dans le fait que les passerelles GW 120, 121 ne peuvent pas s'enregistrer dans le système via leur interface de communication Radio Fréquence.

Les interfaces de communication Radio Fréquence utilisées dans le système sont par exemple de type LoRaWAN (portée radio de plusieurs kilomètres en champ libre). Les passerelles GW et les compteurs électriques M+ utilisant leurs interfaces de communication Radio Fréquence sont alors tout le temps à l'écoute du medium, afin de permettre la mise en place de communications bidirectionnelles asynchrones. Les interfaces de communication Radio Fréquence utilisées dans le système sont par exemple de type KNX RF (portée radio de 100 mètres en champ libre), tel que décrit dans le standard ISO/IEC 14543-3-x. Dans le cas où le système est supposé avoir une forte densité de compteurs électriques, ces interfaces de communication Radio Fréquence utilisées dans le système sont par exemple de type IEEE 802.15.4 (portée radio de 10 mètres en champ libre) en *mode sans balise* (« non-beacon mode» en anglais). Ces interfaces de communication Radio Fréquence peuvent utiliser une technologie propriétaire dans la bande ISM (« Industriel, Scientifique et Médical »).

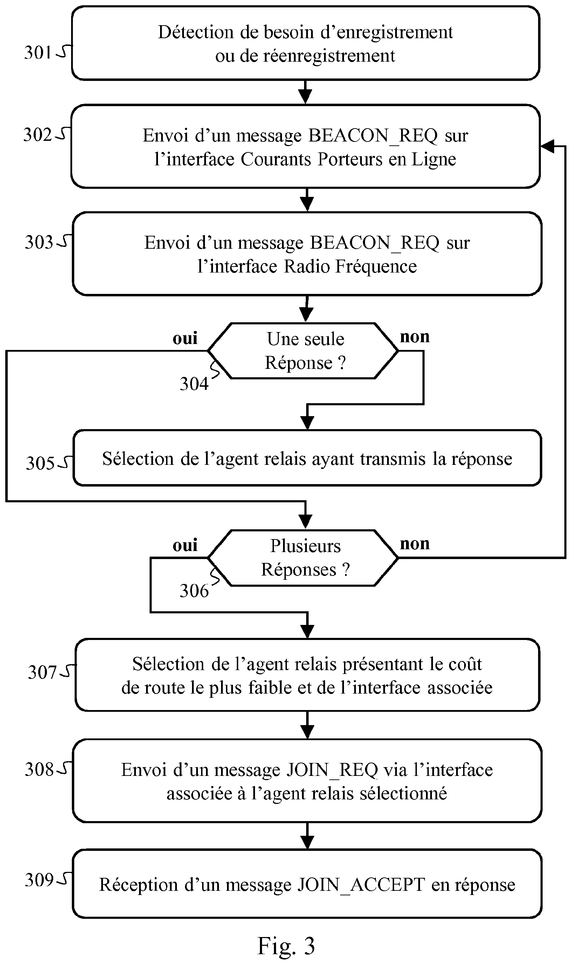

Les compteurs électriques intelligents M+ 114, 116 disposant à la fois d'une interface de communication par Courants Porteurs en Ligne et au moins une interface de communication Radio Fréquence, il leur est possible d'utiliser l'une ou l'autre de ces interfaces de communication pour s'enregistrer au sein du système. Une procédure spécifique est appliquée de sorte à optimiser les performances des communications avec ces compteurs électriques intelligents M+ 114, 116, et ce, de manière transparente pour le dispositif MNC 110. Cet aspect est détaillé ci-après en relation avec les Figs. 3, 4A, 4B, 5A et 5B.

Considérons par la suite, à titre illustratif et par souci de simplification de description, que les compteurs électriques intelligents M+ 114, 116, ainsi que les passerelles GW 120, 121 disposent chacun d'une seule interface de communication de type RF (selon la même technologie Radio Fréquence).

A noter qu'une passerelle GW peut être intégrée au dispositif MNC 110, de manière à pouvoir connecter un ou plusieurs compteurs électriques intelligents M+ directement au dispositif MNC 110.

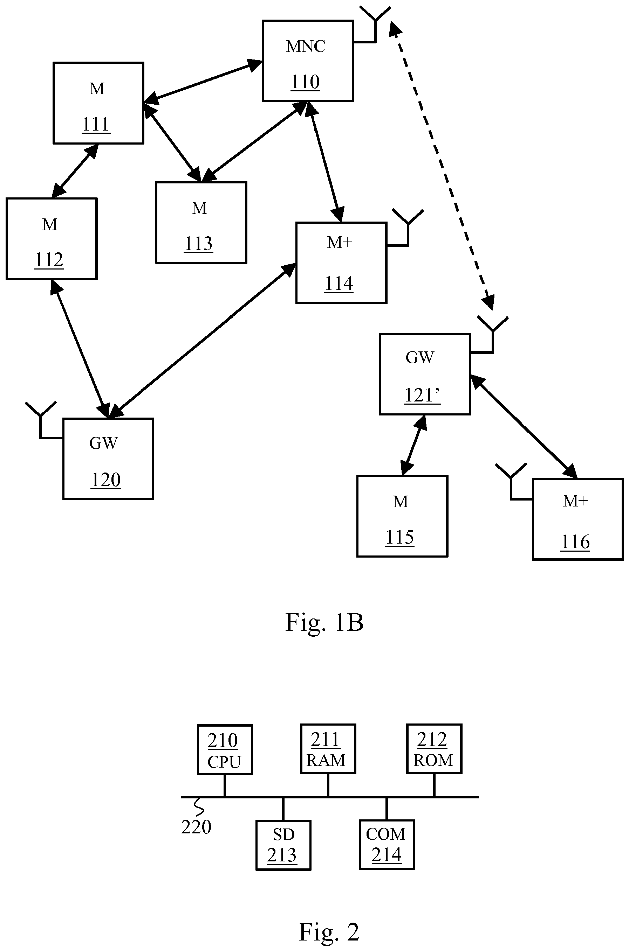

La Fig. 1B illustre schématiquement un autre système de communication dans le cadre d'une gestion automatisée à distance de compteurs électriques intelligents. En comparaison avec le système de la Fig. 1A, le système de la Fig. 1B se distingue par le fait qu'une passerelle GW est intégrée au dispositif MNC 110, ainsi que par la possibilité d'utiliser une ou plusieurs passerelles GW dans une autre configuration que celle décrite en relation avec la Fig. 1A.

La Fig. 1B présente donc une passerelle GW 121' qui est connectée au dispositif MNC 110 via son interface de communication Radio Fréquence. Dans un mode de réalisation particulier, l'interface de communication Radio Fréquence ainsi utilisée est une interface de communication avec un réseau de télécommunication cellulaire, par exemple de type LTE (« Long Terme Evolution » en anglais).

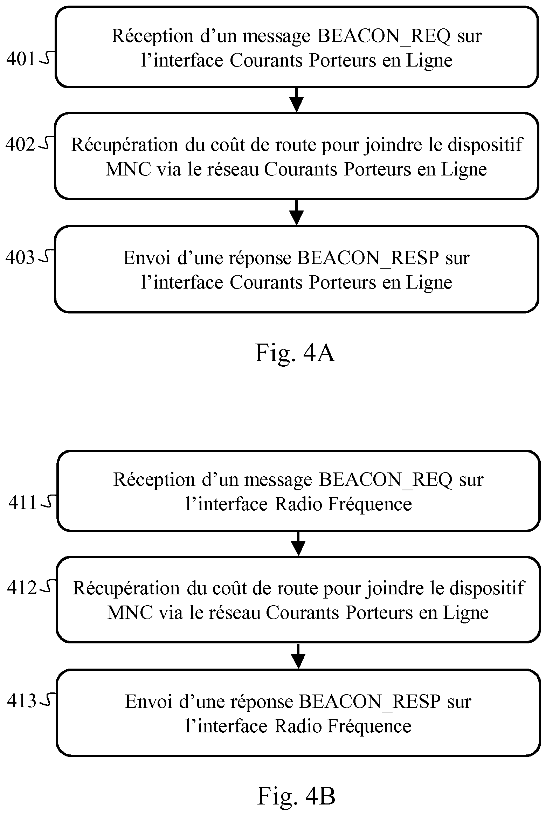

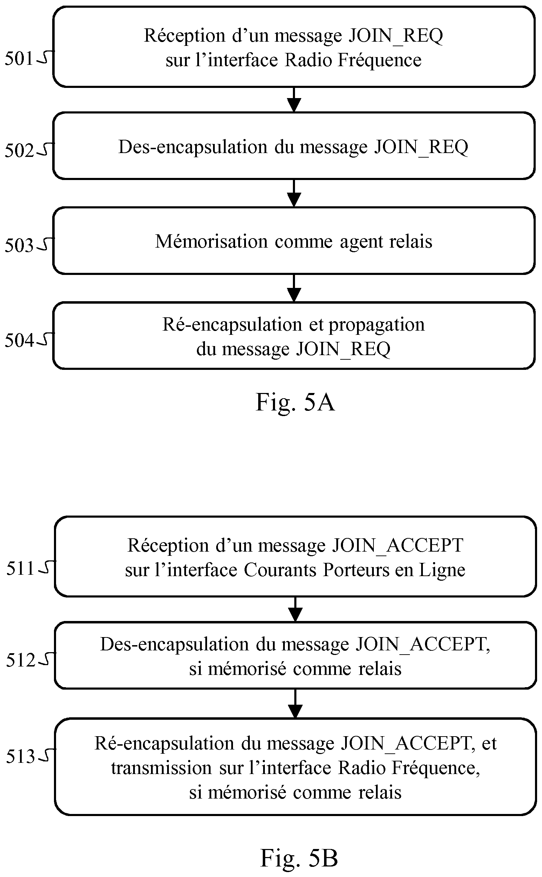

Dans cette configuration, la passerelle GW 121' permet de raccorder au système des compteurs électriques intelligents M ou M+ grâce à son interface de communication par Courants Porteurs en Ligne, tel qu'illustré sur la Fig. 1B. Comme la passerelle GW 121' s'appuie sur son interface de communication Radio Fréquence pour faire le lien avec le dispositif MNC 110, la passerelle GW 121' n'autorise pas de formation de grappe de compteurs électriques intelligents via son interface de communication par Courants Porteurs en Ligne, c'est-à-dire que, dans cette configuration, la passerelle GW 121' n'autorise que ses propres voisins sur l'interface de communication par Courants Porteurs en Ligne à bénéficier du relais, vers le dispositif MNC 110, réalisé grâce à son interface de communication Radio Fréquence. Un traitement spécifique de messages de requête d'enregistrement JOIN-REQUEST est par conséquent appliqué, tel que décrit ci-après en relation avec la Fig. 5A. D'autres compteurs électriques intelligents qui tenteraient d'intégrer le système via la passerelle GW 121' dans cette configuration grâce à leurs interfaces de communication Radio Fréquence se verraient rejeter. Un traitement spécifique de messages de requête d'annonce BEACON-REQUEST est par conséquent appliqué, tel que décrit ci-après en relation avec la Fig. 4B.

Ainsi, dans un mode de réalisation particulier, chaque passerelle GW est capable d'être configurée pour une utilisation selon la configuration décrite ci-dessus en relation avec la Fig. 1A et pour une utilisation selon la configuration décrite ci-dessus en relation avec la Fig. 1B, ces deux utilisations étant exclusives l'une de l'autre. Par exemple, à l'installation, un installateur choisit dans quelle configuration ladite passerelle GW est placée. Selon une autre approche, la configuration décrite ci-dessus en relation avec la Fig. 1B est adoptée par ladite passerelle GW lorsque, au démarrage, ladite passerelle GW ne peut pas entrer en contact avec le dispositif MNC 110 via son interface de communication par Courants Porteurs en Ligne.

Il est aussi possible que le système de communication dans le cadre de la gestion automatisée à distance de compteurs électriques intelligents comporte des passerelles GW qui soient exclusivement configurables dans l'une ou l'autre des configurations décrites ci-dessus en relation avec les Figs. 1A et 1B.

La **Fig. 2** illustre schématiquement un exemple d'architecture matérielle de dispositif de communication du système de la Fig. 1A et/ou de la Fig. 1B, que ce soit un compteur électrique intelligent M+ ou une passerelle GW.

Le dispositif de communication en question comprend alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage 213, tel qu'un disque dur HDD (« Hard Disk Drive » en anglais), ou un lecteur de support de stockage, tel qu'un lecteur de cartes SD (« Secure Digital » en anglais) ; une ou plusieurs interfaces de communication 214 permettant au dispositif de communication de communiquer au sein dudit système, tel qu'évoqué ci-dessus en relation avec la Fig. 1A et la Fig. 1B. Dans le cas où le dispositif de communication est un compteur électrique intelligent M+, le dispositif de communication comporte en outre une unité de comptage configurée pour relever une consommation électrique d'une installation électrique que ledit compteur électrique intelligent M+ est en charge de superviser.

Le processeur 210 est capable d'exécuter des instructions chargées dans la mémoire RAM 211 à partir de la mémoire ROM 212, d'une mémoire externe (non représentée), d'un support de stockage (tel qu'une carte SD), ou d'un réseau de communication. Lorsque le dispositif de communication est mis sous tension, le processeur 210 est capable de lire de la mémoire RAM 211 des instructions et de les exécuter. Ces instructions forment un programme d'ordinateur causant la mise en œuvre, par le processeur 210, de tout ou partie des algorithmes et étapes décrits ci-après en relation avec le dispositif de communication concerné.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 3** illustre schématiquement un algorithme, exécuté par chaque compteur électrique intelligent M+, pour effectuer une phase d'enregistrement dans ledit système, en sélectionnant un agent relais qui va jouer un rôle de mandataire (« proxy » en anglais) vis-à-vis dudit compteur électrique intelligent M+ dans le système de la Fig. 1A ou de la Fig. 1B. Un agent relais est un dispositif, déjà enregistré dans le système, via lequel ledit compteur électrique intelligent M+ va communiquer avec le réseau de communication par Courants Porteurs en Ligne. Ce sera donc soit via son interface de communication par Courants Porteurs en Ligne et soit via son interface de communication Radio Fréquence (ou l'une de ses interfaces de communication Radio Fréquence). Considérons à titre illustratif que l'algorithme de la Fig. 3 est exécuté par le compteur électrique intelligent M+ 116.

Dans une étape 301, le compteur électrique intelligent M+ 116 détecte devoir s'enregistrer au sein du système ou de se réenregistrer au sein du système. Le compteur électrique intelligent M+ doit s'enregistrer au sein du système, à la mise en service du compteur électrique intelligent M+ 116. Le compteur électrique intelligent M+ doit se réenregistrer au sein du système, lorsque le compteur électrique intelligent M+ 116 était déjà enregistré au sein du système mais a perdu le contact avec le dispositif MNC 110.

Le compteur électrique intelligent M+ 116 diffuse alors un message de requête d'annonce, appelé BEACON-REQUEST, sur chacune de ses interfaces de communication. Le compteur électrique intelligent M+ 116 cherche ainsi à déterminer quels sont ses éventuels voisins dans le système. Ainsi, dans une étape 302, le compteur électrique intelligent M+ 116 diffuse ce message de requête d'annonce BEACON-REQUEST via son interface de communication par Courants Porteurs en Ligne. Selon l'exemple du système de la Fig. 1A, ce message de requête d'annonce BEACON-REQUEST est reçu par le compteur électrique intelligent M 115 via son interface de communication par Courants Porteurs en Ligne. Selon l'exemple du système de la Fig. 1A, ce message de requête d'annonce BEACON-REQUEST est aussi reçu par la passerelle GW 121 via son interface de communication par Courants Porteurs en Ligne. De plus, dans une étape 303, le compteur électrique intelligent M+ 116 diffuse ce message de requête d'annonce BEACON-REQUEST via son interface de communication Radio Fréquence. Lorsque le compteur électrique intelligent M+ 116 dispose de plusieurs interfaces de communication Radio Fréquence, le compteur électrique intelligent M+ 116 procède ainsi pour chacune des ses interfaces de communication Radio Fréquence. Selon l'exemple du système de la Fig. 1A, ce message de requête d'annonce BEACON-REQUEST est reçu par la passerelle GW 121 via son interface de communication Radio Fréquence, et est reçu par le compteur électrique intelligent M+ 114 via son interface de communication Radio Fréquence. A noter donc que, selon l'exemple du système de la Fig. 1A, la passerelle GW 121 reçoit le message de requête d'annonce BEACON-REQUEST via chacune de ses deux interfaces de communication. Les autres dispositifs enregistrés au sein du système sont considérés, de manière illustrative dans le cadre du système de la Fig. 1A, hors de portée du compteur électrique intelligent M+ 116.

Le compteur électrique intelligent M+ 116 se met alors en attente de réponse au message de requête d'annonce BEACON-REQUEST qui a été transmis aux étapes 302 et 303. Après un temps d'attente prédéfini, dans une étape 304, le compteur électrique intelligent M+ 116 vérifie si un seul message d'annonce BEACON-RESPONSE a été reçu en réponse. Si tel est le cas, une étape 305 est effectuée ; sinon, une étape 306 est effectuée.

Dans l'étape 305, le compteur électrique intelligent M+ 116 sélectionne comme agent relais le nœud ayant transmis le seul message d'annonce BEACON-RESPONSE reçu. Le compteur électrique intelligent M+ 116 mémorise via quelle interface de communication ledit message d'annonce BEACON-RESPONSE a été reçu, afin de savoir via quelle interface de communication contacter ledit agent relais pour communiquer avec le dispositif MNC 110. Il est ensuite mis fin à l'algorithme de la Fig. 3.

Dans l'étape 306, le compteur électrique intelligent M+ 116 vérifie si plusieurs messages d'annonce BEACON-RESPONSE ont été reçus en réponse. Si tel est le cas, une étape 307 est effectuée; sinon, le compteur électrique intelligent M+ 116 va continuer à sonder ses interfaces de communication à la recherche d'éventuels voisins dans le système, en réitérant l'étape 302.

Dans l'étape 307, le compteur électrique intelligent M+ 116 récupère dans chaque message d'annonce BEACON-RESPONSE reçu une information de coût de route entre le nœud ayant transmis ledit message d'annonce BEACON-RESPONSE et le dispositif MNC 110. Le compteur électrique intelligent M+ 116 met ensuite à jour chaque information de coût de route ainsi récupérée, en ajoutant un coût de route additionnel dû au lien entre ledit nœud ayant transmis ledit message d'annonce BEACON-RESPONSE en question et le compteur électrique intelligent M+ 116. Ce coût de route additionnel dépend donc de l'interface de communication, par Courants Porteurs en Ligne ou Radio Fréquence, via laquelle ledit message d'annonce BEACON-RESPONSE en question a été reçu par le compteur électrique intelligent M+ 116, puisque ces deux interfaces de communication ont typiquement des coûts de route différents.

Les coûts de route sont des métriques de routage permettant de décider quelle route choisir lorsque plusieurs routes permettent d'établir une communication entre deux nœuds du système. Chaque route ou chemin est constituée d'un ou plusieurs liens, chaque lien étant associé à un coût de route. Le coût de route associé à un chemin est la somme des coûts de route des liens constituant le chemin ou le coût de route du lien constituant le chemin. Les coûts de route sont une notion classique de routage dans les réseaux de communication maillés. Les coûts de route peuvent s'appuyer sur des critères de débit atteignable et/ou de latence de transmission et/ou de ratio entre bande passante requise pour établir ladite route et bande passante encore disponible et/ou de quantité de ressources de traitement requises et/ou de rapport signal-à-bruit et/ou de taux de perte. D'autres critères peuvent être utilisés, les coûts de route n'étant pas des informations absolues mais relatives pour comparer l'impact d'établir une route plutôt qu'une autre. Par exemple, l'utilisation d'un schéma de modulation et de codage de type BPSK (« Binary Phase-Shift Keying » en anglais) sur un lien a un coût de route plus élevé qu'un schéma de modulation et de codage de type QPSK (« Quadrature Phase-Shift Keying » en anglais), lui-même ayant un coût de route plus élevé qu'un schéma de modulation et de codage de type 8PSK (« 8-Phase Shift Keying » en anglais). Selon un autre exemple, un schéma de répétition à trois répétitions sur un lien a un coût de route plus élevé qu'un schéma de répétition à deux répétitions, lui-même ayant un coût de route plus élevé qu'un schéma de répétition à une répétition. La définition du coût de route additionnel susmentionné peut notamment utiliser une information représentative de qualité de transmission détectée sur la réception du message d'annonce BEACON-RESPONSE via le lien concerné.

Les coûts de route via des liens par Courants Porteurs en Ligne et via des liens Radio Fréquence sont définis de manière cohérente entre eux, c'est-à-dire que la même échelle de coût de route est utilisée dans les deux cas. Par exemple, en considérant de manière illustrative que le coût de route d'un lien dépend essentiellement du ratio entre la bande passante requise pour établir ladite route et la bande passante encore disponible sur ledit lien, le coût de route sera le même que le lien soit par Courants Porteurs en Ligne ou Radio Fréquence pour des ratios identiques. Par exemple, en considérant :
- des liens par Courants Porteurs en Ligne sur lesquels des schémas de modulation et de codage de type 8PSK, QPSK, BPSK et ROBO (schéma de modulation et de codage basé sur un schéma de modulation et de codage BPSK avec répétition de bits) peuvent être utilisés, et
- des liens par Radio Fréquence sur lesquels des schémas de répétition à une, deux ou trois répétitions peuvent être utilisés,
il est possible d'établir une cohérence de coûts de route de la façon suivante :
- l'utilisation d'un lien par Courants Porteurs en Ligne avec un schéma de modulation et de codage de type 8PSK a un coût de route C1 ;
- l'utilisation d'un lien par Courants Porteurs en Ligne avec un schéma de modulation et de codage de type QPSK a un coût de route C2 > C1 ;
- l'utilisation d'un lien par Radio Fréquence avec un schéma de répétition à une répétition a un coût de route C3 > C2 ;
- l'utilisation d'un lien par Courants Porteurs en Ligne avec un schéma de modulation et de codage de type BPSK a un coût de route C4 > C3 ;
- l'utilisation d'un lien par Radio Fréquence avec un schéma de répétition à deux répétitions a un coût de route C5 > C4 ;
- l'utilisation d'un lien par Courants Porteurs en Ligne avec un schéma de modulation et de codage de type ROBO a un coût de route C6 > C5 ; et
- l'utilisation d'un lien par Radio Fréquence avec un schéma de répétition à trois répétitions a un coût de route C7 > C6.

Il est aussi possible d'établir une cohérence de coûts de route en définissant des intervalles de coût pour chacun des schémas de modulation et de codage et chacun des schémas de répétition évoqués ci-dessus, et d'affiner le coût de route du lien au sein de l'intervalle correspondant en utilisant un ou plusieurs autres critères, comme par exemple le ratio entre bande passante requise pour établir ladite route et bande passante encore disponible.

A l'issue de l'étape 307, le compteur électrique intelligent M+ 116 sélectionne alors comme agent relais le nœud qui a transmis le message d'annonce BEACON-RESPONSE qui présente, après ajout du coût de route additionnel susmentionné, le plus faible coût de route. Le compteur électrique intelligent M+ 116 mémorise via quelle interface de communication le message d'annonce BEACON-RESPONSE en question a été reçu, afin de savoir via quelle interface de communication contacter ledit agent relais pour communiquer avec le dispositif MNC 110 (l'agent relais peut en effet être voisin du compteur électrique intelligent M+ 116 par le biais de plusieurs interfaces de communication).

Dans une étape 308, le compteur électrique intelligent M+ 116 transmet, implicitement à destination du dispositif MNC 110, un message de requête d'enregistrement dans le système, appelé JOIN-REQUEST. Le message de requête d'enregistrement JOIN-REQUEST contient un identifiant unique, type EUI64, identifiant le compteur électrique intelligent M+ 116 de manière unique. Le compteur électrique intelligent M+ 116 transmet le message de requête d'enregistrement JOIN-REQUEST via son interface de communication mémorisée vis-à-vis de l'agent relais sélectionné à l'étape 307. Le compteur électrique intelligent M+ 116 adresse ledit message de requête d'enregistrement JOIN-REQUEST audit agent relais sélectionné à l'étape 307, que l'interface de communication mémorisée vis-à-vis de l'agent relais sélectionné à l'étape 307 soit l'interface de communication Radio Fréquence ou l'interface de communication par Courants Porteurs en Ligne. L'agent relais en question se charge alors de transmettre, en mode point-à-point, le message de requête d'enregistrement JOIN-REQUEST au dispositif MNC 110, en utilisant la route déjà établie entre le dispositif MNC 110 et l'agent relais en question (la route qui a permis au compteur électrique intelligent M+ 116 de sélectionner l'agent relais en question à l'étape 307). L'agent relais en question sert alors de mandataire vis-à-vis du compteur électrique intelligent M+ 116. Voir les Figs. 5A et 5B pour le comportement des agents relais.

Le compteur électrique intelligent M+ 116 se met ensuite en attente d'un message d'acquittement d'enregistrement, appelé JOIN-ACCEPT. Ce message d'acquittement d'enregistrement JOIN-ACCEPT est transmis par le dispositif MNC 110 en réponse au message de requête d'enregistrement JOIN-REQUEST, et confirme l'enregistrement dans le système du compteur électrique intelligent M+ 116. Ainsi, dans une étape 308, le compteur électrique intelligent M+ 116 reçoit, de la part de l'agent relais sélectionné à l'étape 307, via l'interface de communication mémorisée vis-à-vis dudit agent relais, le message d'acquittement d'enregistrement JOIN-ACCEPT attendu. Comme détaillé ci-après en relation avec la Fig. 5B, le compteur électrique intelligent M+ 116 ne reçoit qu'un seul message d'acquittement d'enregistrement JOIN-ACCEPT, et ce, via l'agent relais sélectionné à l'étape 307 et via l'interface de communication mémorisée vis-à-vis dudit agent relais.

Le message d'acquittement d'enregistrement JOIN-ACCEPT inclut une adresse de couche liaison du modèle OSI (« Open Systems Interconnection » en anglais), typiquement une adresse appelée adresse courte (« short address » en anglais), que le dispositif MNC 110 a attribué au compteur électrique intelligent M+ 116. Le dispositif MNC 110 dispose ainsi d'une association entre l'identifiant unique, type EUI64, qui était inclus dans le message de requête d'enregistrement JOIN-REQUEST et l'adresse de couche liaison attribuée au compteur électrique intelligent M+ 116. Cette adresse de couche liaison est ensuite utilisée par le compteur électrique intelligent M+ 116 pour communiquer dans le système, afin de permettre un routage de données se cantonnant au niveau de la couche liaison du modèle OSI. Il est ensuite mis fin à l'algorithme de la Fig. 3.

A noter que la procédure d'enregistrement du compteur électrique intelligent M+ 116 peut inclure plus d'échanges de messages que le seul échange des messages JOIN-REQUEST et JOIN-ACCEPT mentionnés ci-dessus, notamment pour intégrer une procédure d'authentification et d'échange d'informations relatives à des clefs de chiffrement.

Après enregistrement au sein du système, le compteur électrique intelligent M+ 116 est dit « rattaché » au système via son agent relais.

Comme détaillé ci-après, après enregistrement du compteur électrique intelligent M+ 116, le routage de messages en provenance ou à destination dudit compteur électrique intelligent M+ 116 s'effectue dans le système au niveau de la couche liaison du modèle OSI sans que l'agent relais utilisé jusqu'alors par le compteur électrique intelligent M+ 116 n'ait à continuer de jouer le rôle de mandataire.

Dans un mode de réalisation particulier, lorsque le compteur électrique intelligent M+ 116 sélectionne un agent relais qui a répondu via son interface de communication par Courants Porteurs en Ligne, le compteur électrique intelligent M+ 116 adopte un rôle de passerelle après enregistrement dudit compteur électrique intelligent M+ 116 dans le système. Le compteur électrique intelligent M+ 116 permet alors à tout autre compteur électrique intelligent M+ de se rattacher au système via son interface de communication Radio Fréquence. Toutefois, lorsque le compteur électrique intelligent M+ 116 est rattaché au système grâce à une passerelle GW agissant comme agent relais et que cette passerelle GW est rattachée directement au dispositif MNC 110 grâce à son interface de communication Radio Fréquence (comme la passerelle GW 121' sur la Fig. 1B), la passerelle GW 121' empêche tout autre compteur électrique intelligent M+ de se rattacher au système en se servant du compteur électrique intelligent M+ 116 comme agent relais. Cet aspect est adressé ci-après en relation avec la Fig. 5B.

La **Fig. 4A** illustre schématiquement un algorithme, exécuté par chaque passerelle GW du système de la Fig. 1A ou de la Fig. 1B et par chaque compteur électrique intelligent M+ rattaché au système via son interface de communication par Courants Porteurs en Ligne, pour répondre à un message de requête d'annonce BEACON-REQUEST transmis via une interface de communication par Courants Porteurs en Ligne (comme décrit ci-dessus à l'étape 302). Considérons à titre illustratif que l'algorithme de la Fig. 4A est exécuté par la passerelle GW 121.

Dans une étape 401, la passerelle GW 121 reçoit, via son interface de communication par Courants Porteurs en Ligne, le message de requête d'annonce BEACON-REQUEST en question.

Dans une étape 402, la passerelle GW 121 récupère une information de coût de route relative à la route utilisée pour communiquer entre ladite passerelle GW 121 et le dispositif MNC 110. Dans le cas de la passerelle GW 121 (Fig. 1A), le coût de route entre ladite passerelle GW 121 et le dispositif MNC 110 est déterminé par diffusion de messages de découverte de route, appelés RREQ, au travers du réseau de communication par Courants Porteurs en Ligne. La route en question n'utilise comme support que le réseau de communication par Courants Porteurs en Ligne. Une procédure typique est décrite dans le standard G3-PLC et est applicable aux réseaux de communication par Courants Porteurs en Ligne à protocole de routage de type réactif. Dans le cas de la passerelle GW 121' (Fig. 1B), le coût de route entre ladite passerelle GW 121' et le dispositif MNC 110 est le coût de route associé au lien Radio Fréquence qui relie directement ladite passerelle GW 121' et le dispositif MNC 110. Notamment lorsque le lien Radio Fréquence qui relie directement ladite passerelle GW 121' et le dispositif MNC 110 utilise un réseau de télécommunication cellulaire, le coût de route dudit lien peut être défini de manière à favoriser toute alternative de communiquer via le réseau de communication par Courants Porteurs en Ligne.

Dans une étape 403, la passerelle GW 121 transmet, via son interface de communication par Courants Porteurs en Ligne en réponse au message de requête d'annonce BEACON-REQUEST, un message d'annonce BEACON-RESPONSE incluant l'information de coût de route récupérée à l'étape 402. Il est alors mis fin à l'algorithme de la Fig. 4A.

Il convient de noter que la passerelle GW 121 ne propage pas le message de requête d'annonce BEACON-REQUEST reçu via son interface de communication par Courants Porteurs en Ligne à l'étape 401. De même que la passerelle GW 121 ne propage pas de message d'annonce BEACON-RESPONSE qui serait reçu, en provenance d'un autre nœud, par la passerelle GW 121 via son interface de communication par Courants Porteurs en Ligne. Les échanges de messages de requête d'annonce BEACON-REQUEST et de messages d'annonce BEACON-RESPONSE interviennent donc uniquement entre voisins.

La **Fig. 4B** illustre schématiquement un algorithme, exécuté par chaque passerelle GW du système et par chaque compteur électrique intelligent M+ rattaché au système via son interface de communication par Courants Porteurs en Ligne, pour répondre à un message de requête d'annonce BEACON-REQUEST transmis via une interface de communication Radio Fréquence (comme décrit ci-dessus à l'étape 303). Considérons à titre illustratif que l'algorithme de la Fig. 4B est exécuté par la passerelle GW 121.

Dans une étape 411, la passerelle GW 121 reçoit, via son interface de communication Radio Fréquence, le message de requête d'annonce BEACON-REQUEST en question. Toutefois, lorsque la passerelle GW en question est connectée directement au dispositif MNC 110 par un lien Radio Fréquence (e.g. la passerelle GW 121' sur la Fig. 1B), ladite passerelle GW en question ignore tout message de requête d'annonce BEACON-REQUEST reçu via son interface de communication Radio Fréquence.

Dans une étape 412, la passerelle GW 121 récupère une information de coût de route relative à la route utilisée pour communiquer entre ladite passerelle GW 121 et le dispositif MNC 110. L'étape 412 est identique à l'étape 402 décrite ci-dessus.

Dans une étape 413, la passerelle GW 121 transmet, via son interface de communication Radio Fréquence en réponse au message de requête d'annonce BEACON-REQUEST, un message d'annonce BEACON-RESPONSE incluant l'information de coût de route récupérée à l'étape 412. Il est alors mis fin à l'algorithme de la Fig. 4B.

Il convient de noter que la passerelle GW 121 ne propage pas le message de requête d'annonce BEACON-REQUEST reçu via son interface de communication Radio Fréquence à l'étape 411. De même que la passerelle GW 121 ne propage pas de message d'annonce BEACON-RESPONSE qui serait reçu, en provenance d'un autre nœud, par la passerelle GW via son interface de communication Radio Fréquence. Ici aussi, les échanges de messages de requête d'annonce BEACON-REQUEST et de messages d'annonce BEACON-RESPONSE interviennent donc uniquement entre voisins. Le comportement est le même pour chaque compteur électrique intelligent M+ rattaché au système via son interface de communication par Courants Porteurs en Ligne.

Il convient de noter qu'un compteur électrique intelligent M+ du système qui est rattaché au système via son interface de communication Radio Fréquence ne répond pas aux messages de requête d'annonce BEACON-REQUEST, y compris ceux éventuellement reçus par son interface de communication par Courants Porteurs en Ligne .

La Fig. 5A illustre schématiquement un algorithme, exécuté par chaque passerelle GW du système, pour traiter un message de requête d'enregistrement JOIN-REQUEST reçu via son interface de communication Radio Fréquence. L'algorithme de la Fig. 5A est aussi exécuté par chaque compteur électrique intelligent M+ ayant adopté le rôle de passerelle. Considérons à titre illustratif que l'algorithme de la Fig. 5A est exécuté par la passerelle GW 121.

Dans une étape 501, la passerelle GW 121 reçoit, via son interface de communication Radio Fréquence, le message de requête d'enregistrement JOIN-REQUEST en question (tel que transmis à l'étape 308).

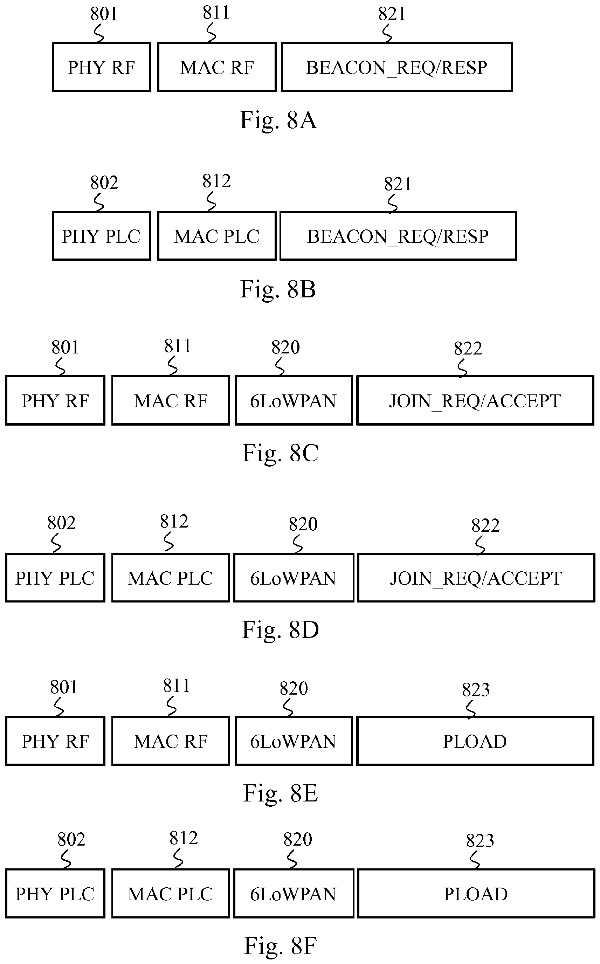

Dans une étape 502, la passerelle GW 121 des-encapsule le message de requête d'enregistrement JOIN-REQUEST, de sorte à conserver uniquement les données (entête(s) et données utiles) indépendantes du support de transmission. Pour plus de détails, voir les Figs. 8A à 8F décrites ci-après.

Dans une étape 503, la passerelle GW 121 mémorise que ladite passerelle GW 121 est sélectionnée comme agent relais par le compteur électrique intelligent M+ en question (voir l'étape 307 décrite ci-dessus), puisque le message de requête d'enregistrement JOIN-REQUEST lui a été spécifiquement adressé. Le fait de mémoriser que ladite passerelle GW 121 est sélectionnée comme agent relais par le compteur électrique intelligent M+ en question permet notamment ultérieurement de mettre à jour une table locale de routage, au moment d'un établissement de route entre ledit compteur électrique intelligent M+ et le dispositif MNC 110. La passerelle GW 121 sait en outre que le message de requête d'enregistrement JOIN-REQUEST doit, par nature, être propagé jusqu'au dispositif MNC 110.

Alors, dans une étape 504, la passerelle GW 121 ré-encapsule le message de requête d'enregistrement JOIN-REQUEST pour permettre sa propagation sur le réseau de communication par Courants Porteurs en Ligne. Pour plus de détails, voir les Figs. 8A à 8F décrites ci-après. La passerelle GW 121 propage alors le message de requête d'enregistrement JOIN-REQUEST sur le réseau de communication par Courants Porteurs en Ligne, afin de permettre au dispositif MNC de le recevoir. Il est alors mis fin à l'algorithme de la Fig. 5A.

Tant qu'une route n'est pas établie (même si le coût de route est connu par avance grâce au mécanisme d'échanges de messages BEACON-REQUEST et BEACON-RESPONSE), les tables locales de routage au sein de la couche liaison des nœuds du réseau ne permettent pas de propager de proche en proche le message de requête d'enregistrement JOIN-REQUEST depuis le compteur électrique intelligent M+ en question jusqu'au dispositif MNC 110. Une route étant toutefois déjà établie entre l'agent relais et le dispositif MNC 110, cette route est utilisée pour propager le message de requête d'enregistrement JOIN-REQUEST. L'agent relais utilise sa propre adresse de couche liaison comme adresse source, ce qui permet au dispositif MNC 110 de lui retourner ultérieurement un message d'acquittement d'enregistrement JOIN-ACCEPT que l'agent relais est alors en charge de propager jusqu'au compteur électrique intelligent M+ en question (voir Fig. 5B).

Lorsque la passerelle GW 121 reçoit, via son interface de communication par Courants Porteurs en Ligne, un message de requête d'enregistrement JOIN-REQUEST en question (tel que transmis à l'étape 308), ledit message est aussi spécifiquement adressé à ladite passerelle GW 121. La passerelle GW 121 doit aussi ultérieurement agir comme agent relais pour le message d'acquittement d'enregistrement JOIN-ACCEPT qui fait suite au message de requête d'enregistrement JOIN-REQUEST en question. Une route étant déjà établie entre l'agent relais et le dispositif MNC 110, l'agent relais utilise ici aussi sa propre adresse de couche liaison comme adresse source, ce qui permet au dispositif MNC 110 de lui retourner ultérieurement un message d'acquittement d'enregistrement JOIN-ACCEPT que l'agent relais est alors en charge de propager jusqu'au compteur électrique intelligent M+ en question.

Etant donné que l'agent relais agit pour le compte du compteur électrique intelligent M+ en question dans la propagation du message de requête d'enregistrement JOIN-REQUEST, l'agent relais en question sert de mandataire (« proxy » en anglais) vis-à-vis du compteur électrique intelligent M+ 116.

Toutefois, dans la configuration particulière de la passerelle GW 121' décrite en relation avec la Fig. 1B, ladite passerelle GW 121' est connectée directement au dispositif MNC 110 via son interface de communication Radio Fréquence et n'autorise pas la formation de grappes via son interface de communication par Courants Porteurs en Ligne. La passerelle GW 121' vérifie alors, sur réception d'un message de requête d'enregistrement JOIN-REQUEST via son interface de communication par Courants Porteurs en Ligne, si ledit message est à l'initiative d'un voisin ou si ce voisin ne fait que relayer ledit message. Dans ce dernier cas, comme décrit ci-après, l'adresse de couche dudit voisin apparaît dans le message de requête d'enregistrement JOIN-REQUEST à des fins de routage dans le système au niveau de la couche liaison du modèle OSI. Si le message de requête d'enregistrement JOIN-REQUEST n'est pas à l'initiative d'un voisin, la passerelle GW 121' ignore ledit message de requête d'enregistrement JOIN-REQUEST, ce qui empêche l'enregistrement au sein du système du nœud à l'initiative dudit message de requête d'enregistrement JOIN-REQUEST. Si le message de requête d'enregistrement JOIN-REQUEST est à l'initiative d'un voisin, la passerelle GW 121' mémorise que ladite passerelle GW 121' est sélectionnée comme agent relais par le compteur électrique intelligent M+ en question, ré-encapsule le message de requête d'enregistrement JOIN-REQUEST pour permettre sa transmission via son interface de communication Radio Fréquence et transmet au dispositif MNC 110 le message de requête d'enregistrement JOIN-REQUEST via son interface de communication Radio Fréquence.

La **Fig. 5B** illustre schématiquement un algorithme, exécuté par chaque passerelle GW du système, pour traiter un message d'acquittement d'enregistrement JOIN-ACCEPT concernant un compteur électrique intelligent M+ pour lequel ladite passerelle GW agit comme agent relais via son interface de communication Radio Fréquence. L'algorithme de la Fig. 5B est aussi exécuté par chaque compteur électrique intelligent M+, ayant adopté le rôle de passerelle, vis-à-vis de tout autre compteur électrique intelligent M+ pour lequel ledit compteur électrique intelligent M+ agit comme agent relais via son interface de communication Radio Fréquence. Considérons à titre illustratif que l'algorithme de la Fig. 5B est exécuté par la passerelle GW 121.

Dans une étape 511, la passerelle GW 121 reçoit, via son interface de communication par Courants Porteurs en Ligne, le message d'acquittement d'enregistrement JOIN-ACCEPT en question, tel que transmis par le dispositif MNC 110. Comme le message de requête d'enregistrement JOIN-REQUEST auquel répond le message d'acquittement d'enregistrement JOIN-ACCEPT comportait comme adresse source de couche liaison celle de la passerelle GW 121, ledit message d'acquittement d'enregistrement JOIN-ACCEPT a été adressé par le dispositif MNC 110 à la passerelle GW 121. La passerelle GW 121 est en charge de propager ledit message d'acquittement d'enregistrement JOIN-ACCEPT jusqu'au compteur électrique M+ qui avait initialement transmis le message de requête d'enregistrement JOIN-REQUEST auquel répond ledit message d'acquittement d'enregistrement JOIN-ACCEPT.

Dans une étape 512, la passerelle GW 121 détecte avoir été sélectionnée comme agent relais par le compteur électrique intelligent M+ concerné par le message d'acquittement d'enregistrement JOIN-ACCEPT (mémorisation à l'étape 503). La passerelle GW 121 des-encapsule le message d'acquittement d'enregistrement JOIN-ACCEPT, de sorte à conserver uniquement les données (entête(s) et données utiles) indépendantes du support de transmission. Pour plus de détails, voir les Figs. 8A à 8F décrites ci-après, et ce, dans le but de le transmettre ensuite via son interface de communication Radio Fréquence.

Dans une étape 513, la passerelle GW 121 ré-encapsule le message d'acquittement d'enregistrement JOIN-ACCEPT pour permettre sa transmission via son interface de communication Radio Fréquence. Pour plus de détails, voir les Figs. 8A à 8F décrites ci-après. La passerelle GW 121 transmet alors le message d'acquittement d'enregistrement JOIN-ACCEPT via l'interface de communication Radio Fréquence, afin de permettre au compteur électrique intelligent M+ concerné de le recevoir. Le message d'acquittement d'enregistrement JOIN-ACCEPT est ici spécifiquement adressé au compteur électrique intelligent M+ concerné. Il est alors mis fin à l'algorithme de la Fig. 5B.

Si le message d'acquittement d'enregistrement JOIN-ACCEPT concerne un compteur électrique intelligent M+ pour lequel ladite passerelle GW agit comme agent relais via son interface de communication par Courants Porteurs en Ligne, la passerelle GW 121 modifie le message d'acquittement d'enregistrement JOIN-ACCEPT en adressant spécifiquement ledit message d'acquittement d'enregistrement JOIN-ACCEPT audit compteur électrique intelligent M+ et transmet le message ainsi modifié via son interface de communication par Courants Porteurs en Ligne.

Toutefois, dans la configuration particulière de la passerelle GW 121' décrite en relation avec la Fig. 1B, ladite passerelle GW 121' reçoit le message d'acquittement d'enregistrement JOIN-ACCEPT via son interface de communication Radio Fréquence directement du dispositif MNC 110. La passerelle GW 121' détecte avoir été sélectionnée comme agent relais par le compteur électrique intelligent M+ concerné par le message d'acquittement d'enregistrement JOIN-ACCEPT et des-encapsule le message d'acquittement d'enregistrement JOIN-ACCEPT, de sorte à conserver uniquement les données (entête(s) et données utiles) indépendantes du support de transmission. Puis, la passerelle GW 121' ré-encapsule le message d'acquittement d'enregistrement JOIN-ACCEPT pour permettre sa transmission via son interface de communication par Courants Porteurs en Ligne.

Comme le message d'acquittement d'enregistrement JOIN-ACCEPT est adressé au niveau de la couche liaison par le dispositif MNC 110 à l'agent relais qui a été sélectionné par le compteur électrique intelligent M+ en question, ledit compteur électrique intelligent M+ ne reçoit qu'un seul message d'acquittement d'enregistrement JOIN-ACCEPT par message de requête d'enregistrement JOIN-REQUEST transmis.

Une fois que le compteur électrique intelligent M+ en question a été enregistré dans le système par le dispositif MNC 110, il est nécessaire d'établir une route (bidirectionnelle, et éventuellement asymétrique) entre le dispositif MNC 110 et le compteur électrique intelligent M+ en question, pour communiquer sans avoir recours à des diffusions successives, et sans requérir que l'agent relais continue de jouer le rôle de mandataire. Une phase de découverte de route doit être réalisée, afin de permettre la mise à jour correspondante des tables locales de routage des nœuds du système. Pour ce faire, des messages de requête de découverte de route, appelés RREQ, et en retour des messages de réponse de découverte de route, appelés RRESP, sont diffusés dans le système. Un mode de transmission par diffusions successives est alors utilisé, avec un mécanisme d'évitement de bouclage perpétuel classique dans les protocoles de routage de type réactif. On retrouve cette approche notamment dans le protocole de routage LOADng. La phase de découverte de route peut être initiée par le dispositif MNC 110 et/ou par le compteur électrique intelligent M+ en question.

A l'issue de la phase de découverte de route entre le dispositif MNC 110 et le compteur électrique intelligent M+ en question, la route présentant le plus faible coût de route est établie, et les tables locales de routage respectives des nœuds du système sont configurées pour permettre d'effectuer des communications entre le dispositif MNC 110 et le compteur électrique intelligent M+ en question sans avoir recours à des diffusions successives, et sans requérir que l'agent relais continue de jouer le rôle de mandataire. Lorsque le compteur électrique intelligent M+ s'appuie sur un nœud agissant comme agent relais via son interface de communication Radio Fréquence, ledit nœud a mémorisé à l'étape 503 avoir été sélectionné comme agent relais par le compteur électrique intelligent M+. Ainsi, lors de la phase de découverte de route entre le dispositif MNC 110 et le compteur électrique intelligent M+ en question, ledit agent relais indique dans sa table locale de routage que la communication avec le compteur électrique intelligent M+ s'effectue via son interface de communication Radio Fréquence (par défaut, la table locale de routage indique que la communication s'effectue via son interface de communication par Courants Porteurs en Ligne). La mémorisation effectuée à l'étape 503 permet donc de respecter le choix d'interface de communication, et donc indirectement de route, initialement fait par le compteur électrique intelligent M+ à l'étape 307. De la même manière, lorsqu'une passerelle GW est connectée directement au dispositif MNC 110 par son interface de communication Radio Fréquence (comme la passerelle GW 121' sur la Fig. 1B), ladite passerelle GW indique dans sa table locale de routage que la communication avec le dispositif MNC 110 s'effectue via son interface de communication Radio Fréquence.

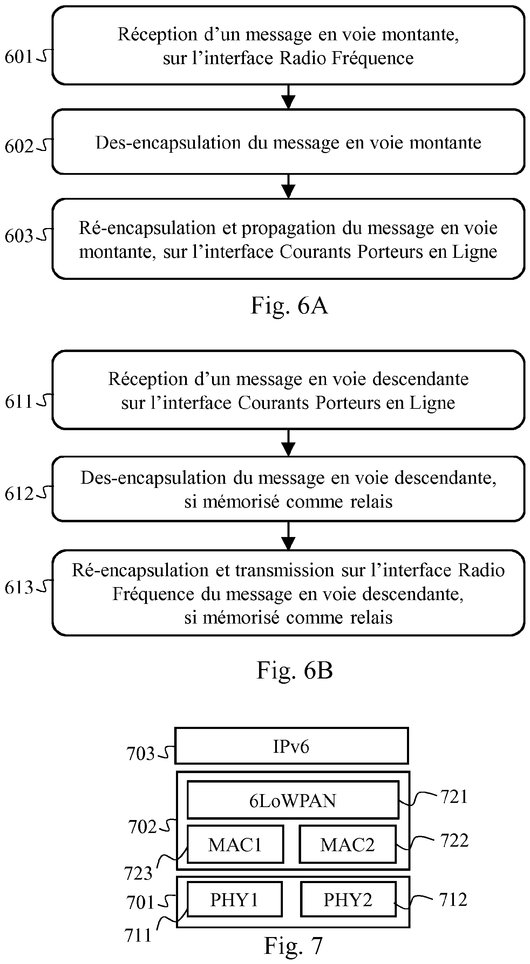

Une fois la route établie entre le dispositif MNC 110 et le compteur électrique intelligent M+ en question, des messages applicatifs peuvent être échangés entre le dispositif MNC 110 et le compteur électrique intelligent M+ en question. De tels messages applicatifs sont par exemple des messages conformes aux spécifications DLMS (« Device Language Message Spécification » en anglais) et COSEM (« Companion Specification for Energy Metering » en anglais), afin de permettre notamment au compteur électrique intelligent M+ en question de transmettre des relevés de comptage au dispositif MNC 110. Du point de vue couche liaison, ces messages applicatifs sont simplement vus comme des messages en voie montante (depuis le compteur électrique intelligent M+ en question vers le dispositif MNC 110) ou en voie descendante (depuis le dispositif MNC 110 vers le compteur électrique intelligent M+ en question). Grâce aux tables locales de routage, les échanges de message s'effectuent de bout en bout au niveau de la couche liaison. Seul l'agent relais a connaissance de l'éventuelle présence du lien radio fréquence pour rattacher le compteur électrique intelligent M+ en question au système. Cet aspect est détaillé ci-après en relation avec les Figs. 6A et 6B.

La **Fig. 6A** illustre schématiquement un algorithme, exécuté par chaque passerelle GW du système, pour traiter un message en voie montante (« uplink » en anglais) en provenance d'un compteur électrique intelligent M+ pour lequel ladite passerelle GW agit comme agent relais via son interface de communication Radio Fréquence. L'algorithme de la Fig. 6A est aussi exécuté par chaque compteur électrique intelligent M+, rattaché au système via son interface de communication par Courants Porteurs en Ligne, vis-à-vis de tout autre compteur électrique intelligent M+ pour lequel ledit compteur électrique intelligent M+ agit comme agent relais via son interface de communication Radio Fréquence. Considérons à titre illustratif que l'algorithme de la Fig. 6A est exécuté par la passerelle GW 121.

Le message en voie montante en question est un message initié par ledit compteur électrique intelligent M+ et destiné au dispositif MNC 110. Le message est transmis, à travers le système, par sauts (« hop » en anglais) depuis ledit compteur électrique intelligent M+ jusqu'au dispositif MNC 110. La transmission entre ledit compteur électrique intelligent M+ et la passerelle GW 121 est le premier saut en séquence. Pour pouvoir effectuer cette transmission par sauts à travers le système, le message en voie montante identifie ledit compteur électrique intelligent M+ grâce à son adresse de couche liaison, ainsi que le dispositif MNC 110, grâce aussi à son adresse de couche liaison. De plus, à chaque saut, le message en voie montante est mis à jour pour identifier le nœud du système d'où est transmis ledit message en voie montante, grâce à son adresse de couche liaison, ainsi que le nœud auquel est destiné ledit message en voie montante pour le saut en question, grâce aussi à son adresse de couche liaison. Les sauts sont ainsi effectués en restant au niveau de la couche liaison, grâce aux tables locales de routage du protocole de routage de type réactif, comme utilisé dans le mode « mesh-under forwarding » du protocole 6LoWPAN (pour « IPv6 over Low power Wireless Personal Area Networks » en anglais, qui a été initialement développé pour supporter IPv6 sur IEEE 802.15.4 et qui a été étendu au standard G3-PLC) qui s'appuie sur le protocole de routage de type réactif LOADng.

Dans une étape 601, la passerelle GW 121 reçoit, via son interface de communication Radio Fréquence, le message en voie montante en question, en provenance du compteur électrique intelligent M+ en question, pour lequel ladite passerelle GW 121 agit comme agent relais via son interface de communication Radio Fréquence.

Dans une étape 602, la passerelle GW 121 des-encapsule le message en voie montante en question, de sorte à conserver uniquement les données (entête(s) et données utiles) indépendantes du support de transmission. Pour plus de détails, voir les Figs. 8A à 8F décrites ci-après.

Dans une étape 603, la passerelle GW 121 ré-encapsule le message en voie montante en question pour permettre de réaliser, via son interface de communication par Courants Porteurs en Ligne, le prochain saut vers le dispositif MNC 110. La passerelle GW 121 identifie le prochain nœud en route vers le dispositif MNC 110 grâce à sa table locale de routage du protocole de routage de type réactif. La passerelle GW 121 met à jour le message en voie montante avec les adresses de couche liaison nécessaires pour assurer le prochain saut vers le dispositif MNC 110. Pour plus de détails, voir les Figs. 8A à 8F décrites ci-après. La passerelle GW 121 transmet alors le message en voie montante, via son interface de communication par Courants Porteurs en Ligne.

Dans le cas où le message en voie montante généré par ledit compteur électrique intelligent M+ et destiné au dispositif MNC 110 est reçu par la passerelle GW 121 par son interface par Courants Porteurs en Ligne, la passerelle GW 121 fait suivre le message en voie montante en question dans le réseau de communication par Courants Porteurs en Ligne en sélectionnant le prochain nœud en route vers le dispositif MNC 110 conformément à sa table locale de routage.

Toutefois, dans la configuration particulière de la passerelle GW 121' décrite en relation avec la Fig. 1B, ladite passerelle GW 121' reçoit le message en voie montante en question via son interface de communication par Courants Porteurs en Ligne. La passerelle GW 121' des-encapsule alors le message en voie montante en question, de sorte à conserver uniquement les données (entête(s) et données utiles) indépendantes du support de transmission. La passerelle GW 121' ré-encapsule le message en voie montante en question pour permettre sa transmission via son interface de communication Radio Fréquence, et transmet au dispositif MNC 110 ledit message en voie montante via son interface de communication Radio Fréquence.

La **Fig. 6B** illustre schématiquement un algorithme, exécuté par chaque passerelle GW du système, pour traiter un message en voie descendante (« downlink » en anglais) à destination d'un compteur électrique intelligent M+ pour lequel ladite passerelle GW agit comme agent relais via son interface de communication Radio Fréquence. L'algorithme de la Fig. 6B est aussi exécuté par chaque compteur électrique intelligent M+, connecté rattaché au système via son interface de communication par Courants Porteurs en Ligne, vis-à-vis de tout autre compteur électrique intelligent M+ pour lequel ledit compteur électrique intelligent M+ agit comme agent relais via son interface de communication Radio Fréquence. Considérons à titre illustratif que l'algorithme de la Fig. 6B est exécuté par la passerelle GW 121.

Le message en voie descendante en question est un message initié par le dispositif MNC 110 et destiné audit compteur électrique intelligent M+. Le message est transmis, à travers le système, par sauts depuis le dispositif MNC 110 jusqu'audit compteur électrique intelligent M+. La transmission entre ledit compteur électrique intelligent M+ et la passerelle GW 121 est le dernier saut en séquence. Les sauts sont ici aussi effectués en restant au niveau de la couche liaison

Dans une étape 611, la passerelle GW 121 reçoit, via son interface de communication par Courants Porteurs en Ligne, le message en voie descendante en question, à destination du compteur électrique intelligent M+ en question, pour lequel ladite passerelle GW 121 agit comme agent relais via son interface de communication Radio Fréquence.

Dans une étape 612, la passerelle GW 121 des-encapsule le message en voie descendante en question, de sorte à conserver uniquement les données (entête(s) et données utiles) indépendantes du support de transmission. Pour plus de détails, voir les Figs. 8A à 8F décrites ci-après.

Dans une étape 613, la passerelle GW 121 ré-encapsule le message en voie descendante en question pour permettre de réaliser, via son interface de communication Radio Fréquence, le prochain et dernier saut vers ledit compteur électrique intelligent M+ pour lequel la passerelle GW 121 agit comme agent relais via son interface de communication Radio Fréquence. La passerelle GW 121 met à jour le message en voie descendante avec les adresses de couche liaison nécessaires pour assurer le prochain et dernier saut vers le compteur électrique intelligent M+ en question. Pour plus de détails, voir les Figs. 8A à 8F décrites ci-après. La passerelle GW 121 transmet alors le message en voie descendante, via son interface de communication Radio Fréquence.

Dans le cas où le message en voie descendante généré par le dispositif MNC 110 et destiné audit compteur électrique intelligent M+ est reçu par la passerelle GW 121 et que la passerelle GW 121 n'agit pas pour ledit compteur électrique intelligent M+ comme agent relais via son interface de communication Radio Fréquence, la passerelle GW 121 fait suivre le message en voie descendante en question dans le réseau de communication par Courants Porteurs en Ligne en sélectionnant le prochain nœud en route vers ledit compteur électrique intelligent M+ (qui peut être ledit compteur électrique intelligent M+ lui-même) conformément à sa table locale de routage.

Toutefois, dans la configuration particulière de la passerelle GW 121' décrite en relation avec la Fig. 1B, ladite passerelle GW 121' reçoit le message en voie descendante en question via son interface de communication Radio Fréquence, directement du dispositif MNC 110. La passerelle GW 121' des-encapsule alors le message en voie descendante en question, de sorte à conserver uniquement les données (entête(s) et données utiles) indépendantes du support de transmission. La passerelle GW 121' ré-encapsule le message en voie descendante en question pour permettre sa transmission via son interface de communication par Courants Porteurs en Ligne pour assurer le dernier saut, et transmet au compteur électrique intelligent M+ concerné ledit message en voie descendante via son interface de communication par Courants Porteurs en Ligne.

La **Fig. 7** illustre schématiquement une portion de pile de communication utilisée dans le système.

La portion de pile communication schématiquement représentée sur la Fig. 7 montre les trois plus basses couches du modèle OSI, à savoir la couche physique 701, la couche liaison 702, et la couche réseau 703. Les communications entre couches réseau de nœuds du système (sur lesquelles s'appuient les couches d'ordre supérieur) s'appuient sur un adressage IPv6, alors que les adresses de couche liaison permettent des communications entre couches liaison de nœuds du système (sans avoir à remonter aux couches d'ordre supérieur, y compris la couche réseau).

Chaque passerelle GW du système et chaque compteur électrique intelligent M+ du système disposent d'au moins deux interfaces de communication, à savoir une interface de communication par Courants Porteurs en Ligne et au moins une interface de communication Radio Fréquence. Pour chacune de ces interfaces, la couche physique 701 comporte une sous-couche physique dédiée. La Fig. 7 montre deux sous-couches physique PHY1 711 (pour l'interface de communication par Courants Porteurs en Ligne) et PHY2 712 (pour une interface de communication Radio Fréquence).

La Fig. 7 montre aussi que la couche liaison 702 est décomposée en plusieurs sous-couches. La couche liaison 702 comporte tout d'abord une sous-couche de contrôle d'accès au medium MAC (« Medium Access Control » en anglais) associée à chaque sous-couche physique, donc pour chaque interface de communication. La Fig. 7 montre ainsi une sous-couche de contrôle d'accès au medium MAC1 723 associée à la sous-couche physique PHY1 711 et une sous-couche de contrôle d'accès au medium MAC2 722 associée à la sous-couche physique PHY2 712. Les sous-couches de contrôle d'accès au medium MAC1 723 et MAC2 722 sont en charge d'assurer les communications avec les voisins via respectivement les sous-couches physiques PHY1 711 et PHY2 712, et notamment de définir les configurations des sous-couches physiques PHY1 711 ou PHY2 712 à utiliser pour chaque voisin (schéma de modulation et de codage, etc.).

Dans un mode de réalisation particulier, les sous-couches de contrôle d'accès au medium MAC1 723 et MAC2 722 implémentent des fonctionnalités et services similaires. Plus précisément, chacune des sous-couches de contrôle d'accès au medium MAC1 723 et MAC2 722 implémente un même mécanisme de contrôle d'accès au medium, par exemple de type CSMA-CA (« Carrier Sense Multiple Access with Collision Avoidance » en anglais), permettant de communiquer entre nœuds voisins. De plus, chacune des sous-couches de contrôle d'accès au medium MAC1 723 et MAC2 722 implémente un mécanisme de fragmentation et de réassemblage de paquets, un mécanisme de répétition automatique de requête ARQ (« Automatic Repeat reQuest » en anglais) et un mécanisme d'écoute continue du medium quand le nœud concerné n'émet pas sur le medium. Préférentiellement, chacune des sous-couches de contrôle d'accès au medium MAC1 723 et MAC2 722 implémente un mécanisme de gestion de priorité de paquets, et sont capables de supporter des tailles de paquets égales à 1500 octets.

La couche liaison 702 comporte aussi une sous-couche d'adaptation 721 interfaçant la couche réseau 701 avec les sous-couches de contrôle d'accès au medium MAC1 723 et MAC2 722. La sous-couche d'adaptation 721 implémente la table locale de routage, définissant pour chaque nœud du système via quel voisin propager un message adressé audit nœud du système. Chaque nœud y est identifié grâce à son adresse de couche liaison. Le protocole de routage de type réactif est ainsi implémenté au niveau de cette sous-couche d'adaptation 721. La sous-couche d'adaptation 721 est préférentiellement conforme au protocole 6LoWPAN.

Il est donc apparent sur la Fig. 7 que la convergence des interfaces de communication Radio Fréquence et par Courants Porteurs en Ligne s'effectue au niveau 2 du modèle OSI (couche liaison). Cette diversité de support de transmission est ainsi transparente au niveau 3 du modèle OSI (couche réseau). Cette diversité de support de transmission est aussi vue par la sous-couche d'adaptation 721 de chaque nœud qui dispose à la fois d'une interface de communication par Courants Porteurs en Ligne et d'au moins une interface de communication Radio Fréquence. Mais le fait que tel ou tel nœud du système dispose à la fois d'une interface de communication par Courants Porteurs en Ligne et d'au moins une interface de communication Radio Fréquence est transparent pour le dispositif MNC 110, qui peut ainsi gérer le système comme si tous les nœuds étaient directement connectés au réseau de communication par Courants Porteurs en Ligne.

Par souci de simplification, la Fig. 7 ne montre pas les couches d'ordre supérieur du modèle OSI.

Les **Figs. 8A à 8F** illustrent schématiquement des formats de messages utilisés dans le système.

La Fig. 8A montre un format de message de requête d'annonce BEACON-REQUEST, ou de message d'annonce BEACON-RESPONSE, utilisé sur les liens Radio Fréquence. Le format de la Fig. 8A inclut un entête PHY RF 801 de couche physique, adapté à la sous-couche physique (voir Fig. 7) en question. Le format de la Fig. 8A inclut en outre un entête MAC RF 811 de sous-couche de contrôle d'accès (voir Fig. 7) adapté à la couche physique en question. Le format de la Fig. 8A inclut en outre des données utiles 821 représentative du message de requête d'annonce BEACON-REQUEST, ou du message d'annonce BEACON-RESPONSE. A noter donc que le format de la Fig. 8A n'inclut pas d'entête de sous-couche d'adaptation (voir Fig. 7), puisque les messages de requête d'annonce BEACON-REQUEST et les messages d'annonce BEACON-RESPONSE ne sont échangés qu'entre voisins et ne sont pas routés au travers du réseau de communication par Courants Porteurs en Ligne.

La Fig. 8B montre un format de message de requête d'annonce BEACON-REQUEST, ou de message d'annonce BEACON-RESPONSE, utilisé sur les liens par Courants Porteurs en Ligne. Le format de la Fig. 8B inclut un entête PHY PLC 802 de couche physique, adapté à la sous-couche physique (voir Fig. 7) en question. Le format de la Fig. 8B inclut en outre un entête MAC PLC 812 de sous-couche de contrôle d'accès (voir Fig. 7) adapté à la couche physique en question. Le format de la Fig. 8B inclut en outre les données utiles 821 déjà évoquées en relation avec la Fig. 8A. A noter donc que le format de la Fig. 8B n'inclut pas d'entête de sous-couche d'adaptation (voir Fig. 7), puisque les messages de requête d'annonce BEACON-REQUEST et les messages d'annonce BEACON-RESPONSE ne sont échangés qu'entre voisins et ne sont pas routés au travers du réseau de communication par Courants Porteurs en Ligne.

La Fig. 8C montre un format de message de requête d'enregistrement JOIN-REQUEST, ou de message d'acquittement d'enregistrement JOIN-ACCEPT, utilisé sur les liens Radio Fréquence. Le format de la Fig. 8C inclut l'entête PHY RF 801 de couche physique déjà évoqué en relation avec la Fig. 8A. Le format de la Fig. 8C inclut en outre l'entête MAC RF 811 de sous-couche de contrôle d'accès déjà évoqué en relation avec la Fig. 8A. Le format de la Fig. 8C inclut en outre un entête 820 de sous-couche d'adaptation (voir Fig. 7) permettant d'effectuer un routage au travers du système. L'entête 820 de sous-couche d'adaptation comporte l'adresse de couche liaison du nœud source du message (sauf pour le message de requête d'enregistrement JOIN-REQUEST) et l'adresse de couche liaison du nœud destinataire du message. L'entête 820 de sous-couche d'adaptation comporte en outre, pour chaque saut effectué dans le système, l'adresse de couche liaison du nœud source du message pour ledit saut (sauf lors de l'émission du message de requête d'enregistrement JOIN-REQUEST par le compteur électrique intelligent M+ qui cherche à s'enregistrer dans le système) et l'adresse de couche liaison du nœud destination pour ledit saut. L'entête 820 de sous-couche d'adaptation est indépendant du lien, par Courants Porteurs en Ligne ou Radio Fréquence, sur lequel transite le message en question. Le format de la Fig. 8C inclut en outre des données utiles 822 représentative du message de requête d'enregistrement JOIN-REQUEST, ou de message d'acquittement d'enregistrement JOIN-ACCEPT. L'adresse de couche liaison attribuée par le dispositif MNC 110 au compteur électrique intelligent M+ auquel ledit message d'acquittement d'enregistrement JOIN-ACCEPT est destiné est ainsi incluse dans l'entête 820 de sous-couche d'adaptation, ainsi que l'adresse de couche liaison du dispositif MNC 110.

La Fig. 8D montre un format de message de requête d'enregistrement JOIN-REQUEST, ou de message d'acquittement d'enregistrement JOIN-ACCEPT, utilisé sur les liens par Courants Porteurs en Ligne. Le format de la Fig. 8D inclut l'entête PHY PLC 802 de couche physique déjà évoqué en relation avec la Fig. 8B. Le format de la Fig. 8D inclut en outre l'entête MAC PLC 812 de sous-couche de contrôle d'accès déjà évoqué en relation avec la Fig. 8B. Le format de la Fig. 8D inclut en outre l'entête 820 de sous-couche d'adaptation déjà évoqué en relation avec la Fig. 8C. Le format de la Fig. 8D inclut en outre les données utiles 822 déjà évoquées en relation avec la Fig. 8C.

La Fig. 8E montre un format de message en voie montante, ou de message en voie descendante, utilisé sur les liens Radio Fréquence après enregistrement du compteur électrique intelligent M+ au sein du système. Le format de la Fig. 8E inclut l'entête PHY RF 801 de couche physique déjà évoqué en relation avec la Fig. 8A. Le format de la Fig. 8E inclut en outre l'entête MAC RF 811 de sous-couche de contrôle d'accès déjà évoqué en relation avec la Fig. 8A. Le format de la Fig. 8E inclut en outre l'entête 820 de sous-couche d'adaptation déjà évoqué en relation avec la Fig. 8C. L'entête 820 de sous-couche d'adaptation comporte l'adresse de couche liaison du nœud source du message et l'adresse de couche liaison du nœud destinataire du message. L'entête 820 de sous-couche d'adaptation comporte en outre, pour chaque saut effectué dans le système, l'adresse de couche liaison du nœud source du message pour ledit saut et l'adresse de couche liaison du nœud destinataire du message pour ledit saut. L'entête 820 de sous-couche d'adaptation est indépendant du lien, par Courants Porteurs en Ligne ou Radio Fréquence, utilisé pour effectuer ledit saut. Le format de la Fig. 8E inclut en outre des données utiles 823 représentative du message en voie montante, ou du message en voie descendante. Ces données utiles 823 peuvent s'appuyer des protocoles de transport et des protocoles applicatifs, par exemple conformes aux spécifications DLMS et COSEM.

La Fig. 8F montre un format de message en voie montante, ou de message en voie descendante, utilisé sur les liens par Courants Porteurs en Ligne après enregistrement du compteur électrique intelligent M+ au sein du système. Le format de la Fig. 8F inclut l'entête PHY PLC 802 de couche physique déjà évoqué en relation avec la Fig. 8B. Le format de la Fig. 8F inclut en outre l'entête MAC PLC 812 de sous-couche de contrôle d'accès déjà évoqué en relation avec la Fig. 8B. Le format de la Fig. 8F inclut en outre l'entête 820 de sous-couche d'adaptation tel qu'évoqué en relation avec la Fig. 8E. Le format de la Fig. 8F inclut en outre les données utiles 823 déjà évoquées en relation avec la Fig. 8E.

Lorsqu'un compteur électrique intelligent M+ s'appuie pour communiquer avec le dispositif MNC 110 sur un agent relais via son interface de communication Radio Fréquence, il est possible que le lien Radio Fréquence en question se rompe, et que le compteur électrique intelligent M+ en question perde contact avec le dispositif MNC 110. Ainsi, dans un mode de réalisation particulier, le compteur électrique intelligent M+ surveille l'état du lien Radio Fréquence en question. Pour ce faire, le compteur électrique intelligent M+ en question peut utiliser l'un et/ou l'autre des mécanismes de surveillance suivants.

Un premier mécanisme de surveillance consiste à échanger avec l'agent relais, via ledit lien Radio Fréquence, des messages de vérification de connectivité radio. Un des points de terminaison dudit lien Radio Fréquence (à savoir ledit compteur électrique intelligent M+ ou son agent relais) transmet un message de requête de vérification de connectivité radio, appelé LinkCheckReq. Lorsque l'autre point de terminaison reçoit ce message de requête de vérification de connectivité radio LinkCheckReq, il transmet en réponse un message d'acquittement d'existence de connectivité radio, appelé LinkCheckResp. Recevoir correctement ces messages permet d'assurer que la connectivité radio est toujours présente.

Un second mécanisme de surveillance consiste à échanger périodiquement des messages d'indication de présence (« keep-alive » en anglais) avec le dispositif MNC 110. Cela permet en outre au dispositif MNC 110 de savoir que le compteur électrique intelligent M+ en question est toujours présent dans le système. De plus, l'échange avec le dispositif MNC 110 de messages applicatifs autres que lesdits messages d'indication de présence permet au compteur électrique intelligent M+ en question et au dispositif MNC 110 de savoir que le contact est maintenu. L'absence de réponse à des messages applicatifs est par contre révélatrice d'une perte de contact.

Lorsque le premier mécanisme de surveillance et/ou le second mécanisme de surveillance montre une perte de contact, le compteur électrique intelligent M+ en question relance l'algorithme de la Fig. 3. Les tables locales de routage sont réinitialisées, vis-à-vis de la route entre le compteur électrique intelligent M+ en question et le dispositif MNC 110, au niveau dudit compteur électrique intelligent M+ et du dispositif MNC 110. Les tables locales de routage des autres nœuds du système sont réinitialisées, vis-à-vis de la route entre le compteur électrique intelligent M+ en question et le dispositif MNC 110, soit par péremption des données relatives à ladite route (les données sont associées à une durée de vie), soit par définition d'une nouvelle route par réactivation d'une phase de découverte de route entre le compteur électrique intelligent M+ en question et le dispositif MNC 110.

## Revendications

1. Procédé de connexion d'un compteur électrique intelligent (116) à un système comportant un réseau de communication par courants porteurs en ligne avec protocole de routage réactif pour mettre en contact des nœuds du système et un dispositif de gestion centralisée (110) du système auprès duquel des compteurs électriques intelligents (111, 112, 113, 114, 115) qui sont des nœuds du système doivent être enregistrés, chaque chemin entre un dit nœud du système et le dispositif de gestion centralisée consistant en un lien ou un ensemble de liens, chaque lien étant associé à un coût de route,
le système comportant au moins une passerelle (120, 121) comportant une interface de communication par courants porteurs en ligne pour communiquer via le réseau de communication par courants porteurs en ligne et au moins une interface de communication radio fréquence, et le procédé étant tel qu'un compteur électrique intelligent (116) cherchant à se connecter au système et comportant aussi une interface de communication par courants porteurs en ligne et au moins une interface de communication radio fréquence effectue une phase d'enregistrement comportant les étapes suivantes :
- diffuser (302, 303) sur chacune de ses interfaces de communication un message de requête d'annonce ;
- après réception d'un ou plusieurs messages d'annonce en réponse au message de requête d'annonce de la part respectivement d'un ou plusieurs voisins dans le système, sélectionner (305, 307) un agent relais, l'agent relais étant le voisin dans le système présentant le plus faible coût de route pour joindre le dispositif de gestion centralisée, chaque message d'annonce incluant une information de coût de route entre le voisin ayant émis ledit message d'annonce et le dispositif de gestion centralisée ; et
- effectuer (308, 309) une demande d'enregistrement dudit compteur électrique intelligent auprès du dispositif de gestion centralisée, en utilisant l'agent relais sélectionné comme mandataire via l'interface de communication par laquelle l'agent relais a envoyé le message d'annonce ayant permis d'obtenir ledit plus faible coût de route ;
le procédé étant en outre **caractérisé en ce que** les coûts de route de liens s'appuyant sur des interfaces de communication par courants porteurs en ligne et de liens de communication par radio fréquence sont définis de manière cohérente entre eux,
**en ce que**, après enregistrement dudit compteur électrique intelligent, le routage de messages en provenance ou à destination dudit compteur électrique intelligent s'effectue dans le système au niveau de la couche liaison (702) du modèle OSI,
et **en ce que** lorsque ledit compteur électrique intelligent est enregistré dans le système et lorsqu'en outre l'interface de communication par laquelle l'agent relais a envoyé le message d'annonce ayant permis d'obtenir ledit plus faible coût de route est l'interface de communication par courants porteurs en ligne, ledit compteur électrique intelligent prend le rôle de passerelle dans le système, et
et lorsque ledit compteur électrique intelligent est enregistré dans le système et lorsqu'en outre l'interface de communication par laquelle l'agent relais a envoyé le message d'annonce ayant permis d'obtenir ledit plus faible coût de route est une dite interface de communication radio fréquence, ledit compteur électrique intelligent ne répond pas à d'éventuels messages de requête d'annonce en provenance d'autres compteurs électriques intelligents.

2. Procédé selon la revendication 1, **caractérisé en ce que**, après enregistrement dudit compteur électrique intelligent, une procédure de recherche de route par diffusions successives est effectuée entre le dispositif de gestion centralisée et ledit compteur électrique intelligent afin de mettre à jour des tables locales de routage au niveau de la couche liaison (702) du modèle OSI, et **en ce que**, lorsque l'interface de communication par laquelle l'agent relais a envoyé le message d'annonce ayant permis d'obtenir ledit plus faible coût de route est une interface de communication radio fréquence, l'agent relais inscrit dans sa table locale de routage au niveau de la couche liaison du modèle OSI que le routage des messages en provenance ou à destination dudit compteur électrique intelligent s'effectue via ladite interface de communication radio fréquence.

3. Procédé selon l'une quelconque des revendications 1 et 2, **caractérisé en ce que** la couche liaison du modèle OSI de chaque passerelle est décomposée en un ensemble de sous-couches de contrôle d'accès au medium (722, 723) spécifiques auxdites interfaces de communication de ladite passerelle et une sous-couche d'adaptation (721) interfaçant la couche réseau du modèle OSI avec les sous-couches de contrôle d'accès au medium, le routage de messages dans le système étant effectué par ladite passerelle au niveau de la sous-couche d'adaptation.

4. Procédé selon la revendication 3, **caractérisé en ce que** chacune des sous-couches de contrôle d'accès au medium (722, 723) implémente un même mécanisme de contrôle d'accès au medium permettant de communiquer entre voisins, un mécanisme de fragmentation et de réassemblage de paquets, un mécanisme de répétition automatique de requête et un mécanisme d'écoute continue du medium quand ladite passerelle n'émet pas sur le medium concerné.

5. Procédé selon l'une quelconque des revendications 3 et 4, **caractérisé en ce que** le routage de messages dans le système effectué par la sous-couche d'adaptation est conforme au protocole 6LoWPAN.

6. Procédé selon l'une quelconque des revendications 1 à 5, **caractérisé en ce que**, lorsqu'en outre l'interface de communication par laquelle l'agent relais a envoyé le message d'annonce ayant permis d'obtenir ledit plus faible coût de route est une dite interface de communication radio fréquence, ledit compteur électrique intelligent met en place avec l'agent relais un premier mécanisme de surveillance consistant à échanger, via ladite interface de communication radio fréquence, des messages de vérification de connectivité radio, et **en ce que** ledit compteur électrique intelligent ré-initie la phase d'enregistrement lorsque le premier mécanisme de surveillance montre une perte de connectivité radio.

7. Procédé selon l'une quelconque des revendications 1 à 6, **caractérisé en ce que**, lorsqu'en outre l'interface de communication par laquelle l'agent relais a envoyé le message d'annonce ayant permis d'obtenir ledit plus faible coût de route est une dite interface de communication radio fréquence, ledit compteur électrique intelligent met en place avec l'agent relais un second mécanisme de surveillance consistant à échanger avec le dispositif de gestion centralisée des messages d'indication de présence et/ou d'autres messages applicatifs, et **en ce que** ledit compteur électrique intelligent ré-initie la phase d'enregistrement lorsque le second mécanisme de surveillance montre une perte de contact avec le dispositif de gestion centralisée.

8. Compteur électrique intelligent (116) destiné à être utilisé dans un système comportant un réseau de communication par courants porteurs en ligne avec protocole de routage réactif pour mettre en contact des nœuds du système et un dispositif de gestion centralisée (110) du système auprès duquel des compteurs électriques intelligents (111, 112, 113, 114, 115) qui sont des nœuds du système doivent être enregistrés, chaque chemin entre un dit nœud du système et le dispositif de gestion centralisée consistant en un lien ou un ensemble de liens, chaque lien étant associé à un coût de route,
le système comportant au moins une passerelle (120, 121) comportant une interface de communication par courants porteurs en ligne pour communiquer via le réseau de communication par courants porteurs en ligne et au moins une interface de communication radio fréquence,
ledit compteur électrique intelligent, cherchant à se connecter au système et comportant aussi une interface de communication par courants porteurs en ligne et au moins une interface de communication radio fréquence comportant des moyens pour effectuer une phase d'enregistrement comportant :
- des moyens pour diffuser (302, 303) sur chacune de ses interfaces de communication un message de requête d'annonce ;
- des moyens pour, après réception d'un ou plusieurs messages d'annonce en réponse au message de requête d'annonce de la part respectivement d'un ou plusieurs voisins dans le système, sélectionner (307) un agent relais, l'agent relais étant le voisin dans le système présentant le plus faible coût de route pour joindre le dispositif de gestion centralisée, chaque message d'annonce incluant une information de coût de route entre le voisin ayant émis ledit message d'annonce et le dispositif de gestion centralisée ; et
- des moyens pour effectuer (308, 309) une demande d'enregistrement dudit compteur électrique intelligent auprès du dispositif de gestion centralisée, en utilisant l'agent relais sélectionné comme mandataire via l'interface de communication par laquelle l'agent relais a envoyé le message d'annonce ayant permis d'obtenir ledit plus faible coût de route ;
le système étant en outre **caractérisé en ce que** les coûts de route de liens s'appuyant sur des interfaces de communication par courants porteurs en ligne et de liens de communication par radio fréquence sont définis de manière cohérente entre eux,
et **en ce que**, après enregistrement dudit compteur électrique intelligent, le routage de messages en provenance ou à destination dudit compteur électrique intelligent s'effectue au niveau de la couche liaison (702) du modèle OSI,
et **en ce que** lorsque ledit compteur électrique intelligent est enregistré dans le système et lorsqu'en outre l'interface de communication par laquelle l'agent relais a envoyé le message d'annonce ayant permis d'obtenir ledit plus faible coût de route est l'interface de communication par courants porteurs en ligne, des moyens pour prendre le rôle de passerelle dans le système, et
et lorsque ledit compteur électrique intelligent est enregistré dans le système et lorsqu'en outre l'interface de communication par laquelle l'agent relais a envoyé le message d'annonce ayant permis d'obtenir ledit plus faible coût de route est une dite interface de communication radio fréquence, des moyens pour ne pas répondre à d'éventuels messages de requête d'annonce en provenance d'autres compteurs électriques intelligents.

9. Produit programme d'ordinateur, **caractérisé en ce qu'**il comporte des instructions entraînant l'exécution du procédé selon l'une quelconque des revendications 1 à 7, lorsque lesdites instructions sont exécutées par un processeur.

10. Support de stockage d'informations, **caractérisé en ce qu'**il stocke un programme d'ordinateur comportant des instructions entraînant l'exécution du procédé selon l'une quelconque des revendications 1 à 7, lorsque lesdites instructions sont exécutées par un processeur.

## Patentansprüche

1. Verfahren zur Verbindung eines intelligenten Stromzählers (116) mit einem System, das ein Powerline-Kommunikationsnetz mit reaktivem Routingprotokoll, um Knoten des Systems in Kontakt zu bringen, und eine zentralisierte Verwaltungsvorrichtung (110) des Systems aufweist, bei der intelligente Stromzähler (111, 112, 113, 114, 115), die Knoten des Systems sind, registriert werden müssen, wobei jeder Weg zwischen einem Knoten des Systems und der zentralisierten Verwaltungsvorrichtung aus einer Verbindung oder einer Einheit von Verbindungen besteht, wobei jede Verbindung Routenkosten zugeordnet ist,
wobei das System mindestens ein Gateway (120, 121) aufweist, das eine Powerline-Kommunikationsschnittstelle, um über das Powerline-Kommunikationsnetz zu kommunizieren, und mindestens eine Funkfrequenz-Kommunikationsschnittstelle aufweist, und das Verfahren so ist, dass ein intelligenter Stromzähler (116), der sich mit dem System verbinden will und auch eine Powerline-Kommunikationsschnittstelle und mindestens eine Funkfrequenz-Kommunikationsschnittstelle aufweist, eine Registrierphase ausführt, die folgenden Schritte aufweist:
- Senden (302, 303) einer Meldeanforderungsnachricht auf jeder seiner Kommunikations schnittstellen;
- nach Empfang einer oder mehrerer Meldenachrichten als Antwort auf die Meldeanforderungsnachricht von einem bzw. mehreren Nachbarn im System, Auswahl (305, 307) eines Relay-Agenten, wobei der Relay-Agent der Nachbar im System ist, der die geringsten Routenkosten aufweist, um die zentralisierte Verwaltungsvorrichtung zu erreichen, wobei jede Meldenachricht eine Routenkosteninformation zwischen dem Nachbarn, der die Meldenachricht gesendet hat, und der zentralisierten Verwaltungsvorrichtung enthält; und
- Ausführen (308, 309) eines Registrierantrags des intelligenten Stromzählers bei der zentralisierten Verwaltungsvorrichtung, unter Verwendung des ausgewählten Relay-Agenten als Vertreter über die Kommunikationsschnittstelle, durch die der Relay-Agent die Meldenachricht geschickt hat, die es ermöglicht hat, die geringsten Routenkosten zu erhalten;
wobei das Verfahren außerdem **dadurch gekennzeichnet ist, dass** die Routenkosten von Verbindungen, die sich auf Powerline-Kommunikationsschnittstellen stützen, und von Funkkommunikationsverbindungen zueinander kohärent definiert werden,
dass nach der Registrierung des intelligenten Stromzählers das Routen von Nachrichten vom oder zum intelligenten Stromzähler im System im Bereich der Verbindungsschicht (702) des OSI-Modells ausgeführt wird,
und dass, wenn der intelligente Stromzähler im System registriert ist, und wenn außerdem die Kommunikationsschnittstelle, über die der Relay-Agent die Meldenachricht geschickt hat, die es ermöglicht hat, die geringsten Routenkosten zu erhalten, die Powerline-Kommunikationsschnittstelle ist, der intelligente Stromzähler die Aufgabe als Gateway im System übernimmt, und
wenn der intelligente Stromzähler im System registriert ist, und wenn außerdem die Kommunikationsschnittstelle, über die der Relay-Agent die Meldenachricht geschickt hat, die es ermöglicht hat, die geringsten Routenkosten zu erhalten, eine Funkfrequenz-Kommunikationsschnittstelle ist, der intelligente Stromzähler nicht auf mögliche von anderen intelligenten Stromzählern kommende Meldeanforderungsnachrichten antwortet.

2. Verfahren nach Anspruch 1, **dadurch gekennzeichnet, dass** nach der Registrierung des intelligenten Stromzählers eine Routensuchprozedur durch aufeinanderfolgende Verbreitungen zwischen der zentralisierten Verwaltungsvorrichtung und dem intelligenten Stromzähler ausgeführt wird, um lokale Routing-Tabellen im Bereich der Verbindungsschicht (702) des OSI-Modells zu aktualisieren, und dass, wenn die Kommunikationsschnittstelle, über die der Relay-Agent die Meldenachricht geschickt hat, die es ermöglicht hat, die geringeren Routenkosten zu erhalten, eine Funkfrequenz-Kommunikationsschnittstelle ist, der Relay-Agent in seine lokale Routing-Tabelle im Bereich der Verbindungsschicht des OSI-Modells einträgt, dass das Routen der Nachrichten vom oder zum intelligenten Stromzähler über die Funkfrequenz-Kommunikationsschnittstelle ausgeführt wird.

3. Verfahren nach einem der Ansprüche 1 und 2, **dadurch gekennzeichnet, dass** die Verbindungsschicht des OSI-Modells jedes Gateways in eine Einheit von Teilschichten der Zugangskontrolle zum Medium (722, 723), die für die Kommunikationsschnittstellen des Gateways spezifisch sind, und eine Anpassungsteilschicht (721) zergliedert ist, die die Netzschicht des OSI-Modells mit den Teilschichten der Zugangskontrolle zum Medium verbindet, wobei das Routen der Nachrichten im System vom Gateway im Bereich der Anpassungsteilschicht ausgeführt wird.

4. Verfahren nach Anspruch 3, **dadurch gekennzeichnet, dass** jede der Teilschichten der Zugangskontrolle zum Medium (722, 723) einen gleichen Zugangskontrollmechanismus zum Medium, der es ermöglicht, unter Nachbarn zu kommunizieren, einen Fragmentierungs- und Neuzusammensetzungsmechanismus von Paketen, einen Mechanismus zur automatischen Anforderungswiederholung und einen Mechanismus des kontinuierlichen Abhörens des Mediums implementiert, wenn das Gateway nicht auf dem betroffenen Medium sendet.

5. Verfahren nach einem der Ansprüche 3 und 4, **dadurch gekennzeichnet, dass** das von der Anpassungsteilschicht ausgeführte Routen von Nachrichten im System dem 6LoWPAN-Protokoll entspricht.

6. Verfahren nach einem der Ansprüche 1 bis 5, **dadurch gekennzeichnet, dass**, wenn außerdem die Kommunikationsschnittstelle, über die der Relay-Agent die Meldenachricht geschickt hat, die es ermöglicht hat, die geringsten Routenkosten zu erhalten, eine Funkfrequenz-Kommunikationsschnittstelle ist, der intelligente Stromzähler mit dem Relay-Agenten einen ersten Überwachungsmechanismus einsetzt, der darin besteht, über die Funkfrequenz-Kommunikationsschnittstelle Verifizierungsnachrichten der Funkverbindungsfähigkeit auszutauschen, und dass der intelligente Stromzähler die Registrierungsphase reinitialisiert, wenn der erste Überwachungsmechanismus einen Verlust der Funkverbindungsfähigkeit anzeigt.

7. Verfahren nach einem der Ansprüche 1 bis 6, **dadurch gekennzeichnet, dass**, wenn außerdem die Kommunikationsschnittstelle, über die der Relay-Agent die Meldenachricht geschickt hat, die es ermöglicht hat, die geringsten Routenkosten zu erhalten, eine Funkfrequenz-Kommunikationsschnittstelle ist, der intelligente Stromzähler mit dem Relay-Agenten einen zweiten Überwachungsmechanismus einsetzt, der darin besteht, mit der zentralisierten Verwaltungsvorrichtung Anwesenheitsanzeigenachrichten und/oder andere Anwendungsnachrichten auszutauschen, und dass der intelligente Stromzähler die Registrierungsphase reinitialisiert, wenn der zweite Überwachungsmechanismus einen Kontaktverlust mit der zentralisierten Verwaltungsvorrichtung zeigt.

8. Intelligenter Stromzähler (116), der dazu bestimmt ist, in einem System verwendet zu werden, das ein Powerline-Kommunikationsnetz mit reaktivem Routingprotokoll aufweist, um Knoten des Systems und eine zentralisierte Verwaltungsvorrichtung (110) des Systems in Kontakt zu bringen, bei der intelligente Stromzähler (111, 112, 113, 114, 115), die Knoten des Systems sind, registriert werden sollen, wobei jeder Weg zwischen einem Knoten des Systems und der zentralisierten Verwaltungsvorrichtung aus einer Verbindung oder einer Einheit von Verbindungen besteht, wobei jede Verbindung Routenkosten zugeordnet ist,
wobei das System mindestens ein Gateway (120, 121) aufweist, das eine Powerline-Kommunikationsschnittstelle, um über das Powerline-Kommunikationsnetz zu kommunizieren, und mindestens eine Funkfrequenz-Kommunikationsschnittstelle aufweist,
wobei der intelligente Stromzähler, der sich mit dem System verbinden will und auch eine Powerline-Kommunikationsschnittstelle und mindestens eine Funkfrequenz-Kommunikationsschnittstelle aufweist, Einrichtungen aufweist, um eine Registrierungsphase auszuführen, die aufweisen:
- Einrichtungen zum Verbreiten (302, 303) einer Meldeanforderungsnachricht auf jeder seiner Kommunikationsschnittstellen;
- Einrichtungen, um nach Empfang einer oder mehrerer Meldenachrichten als Antwort auf die Meldeanforderungsnachricht von einem bzw. mehreren Nachbarn im System, einen Relay-Agent auszuwählen (307), wobei der Relay-Agent der Nachbar im System ist, der die geringsten Routenkosten aufweist, um die zentralisierte Verwaltungsvorrichtung zu erreichen, wobei jede Meldenachricht eine Routenkosteninformation zwischen dem Nachbarn, der die Meldenachricht gesendet hat, und der zentralisierten Verwaltungsvorrichtung enthält; und
- Einrichtungen, um eine Registrierungsanfrage des intelligenten Stromzählers bei der zentralisierten Verwaltungsvorrichtung auszuführen (308, 309), unter Verwendung des ausgewählten Relay-Agenten als Vertreter über die Kommunikationsschnittstelle, über die der Relay-Agent die Meldenachricht geschickt hat, die es ermöglicht hat, die geringsten Routenkosten zu erhalten;
wobei das System außerdem **dadurch gekennzeichnet ist, dass** die Routenkosten von Verbindungen, die sich auf Powerline-Kommunikationsschnittstellen stützen, und von Funkkommunikationsverbindungen zueinander kohärent definiert werden,
und dass nach dem Registrieren des intelligenten Stromzählers das Routen von Nachrichten vom oder zum intelligenten Stromzähler im Bereich der Verbindungsschicht (702) des OSI-Modells ausgeführt wird,
und dass, wenn der intelligente Stromzählers im System registriert ist, und wenn außerdem die Kommunikationsschnittstelle, über die der Relay-Agent die Meldenachricht geschickt hat, die es ermöglicht hat, die geringsten Routenkosten zu erhalten, die Powerline-Kommunikationsschnittstelle ist, Einrichtungen zur Übernahme der Aufgabe eines Gateways im System, und
wenn der intelligente Stromzähler im System registriert ist, und wenn außerdem die Kommunikationsschnittstelle, über die der Relay-Agent die Meldenachricht geschickt hat, die es ermöglicht hat, die geringsten Routenkosten zu erhalten, eine Funkfrequenz-Kommunikationsschnittstelle ist, Einrichtungen, um nicht auf von anderen intelligenten Stromzählern kommende mögliche Meldeanforderungsnachrichten zu antworten.

9. Computerprogrammprodukt, **dadurch gekennzeichnet, dass** es Anweisungen enthält, die die Ausführung des Verfahrens nach einem der Ansprüche 1 bis 7 bewirken, wenn die Anweisungen von einem Prozessor ausgeführt werden.

10. Informationsspeicherträger, **dadurch gekennzeichnet, dass** er ein Computerprogramm speichert, das Anweisungen aufweist, die die Ausführung des Verfahrens nach einem der Ansprüche 1 bis 7 bewirken, wenn die Anweisungen von einem Prozessor ausgeführt werden.

## Claims

1. Method for connecting a smart electricity meter (116) to a system comprising a powerline communication network with reactive routing protocol to put in contact nodes of the system and a centralised management device (110) of the system with which smart electricity meters (111, 112, 113, 114, 115) that are nodes in the system shall be registered, each path between one said node in the system and the centralised management device consisting of a link or a set of links, each link being associated with a route cost,
the system comprising at least one gateway (120, 121) comprising a powerline communication interface for communicating via the powerline communication network and at least one radio-frequency communication interface, and the method being such that a smart electricity meter (116) seeking to connect to the system and also comprising a powerline communication interface and at least one radio-frequency communication interface, performs a registration phase comprising the following steps:
- broadcasting (302, 303), on each of its communication interfaces, an announcement request message;
- after reception of one or more announcement messages in response to the announcement request message from respectively one or more neighbours in the system, selecting (305, 307) a relay agent, the relay agent being the neighbour in the system having the lowest route cost for joining the centralised management device, each announcement message including information on the cost of the route between the neighbour that sent the announcement message and the centralised management device; and
- making (308, 309) a request for registration of said smart electricity meter with the centralised management device, using the selected relay agent as proxy via the communication interface via which the relay agent sent the announcement message that enabled obtaining said lowest route cost,
the method being further **characterised in that** the route costs of links relying on powerline communication interfaces and radio-frequency communication links are defined consistently with each other,
and **in that**, after registration of said smart electricity meter, the routing of messages coming from or going to said smart electricity meter takes place in the system at the data link layer (702) of the OSI model,
and **in that**, when said smart electricity meter is registered in the system and furthermore the communication interface via which the relay agent sent the announcement message that enabled obtaining the lowest route cost is the powerline communication interface, said smart electricity meter adopts the role of gateway in the system, and
when said smart electricity meter is registered in the system and furthermore the communication interface via which the relay agent sent the announcement message that enabled obtaining the lowest route cost is one said radio-frequency communication interface, said smart electricity meter does not respond to any announcement request messages coming from other smart electricity meters.

2. Method according to claim 1, **characterised in that**, after registration of said smart electricity meter, a route-search procedure by successive broadcasts is implemented between the centralised management device and said smart electricity meter in order to update local routing tables at the data link layer (702) of the OSI model, and **in that**, when the communication interface via which the relay agent sent the announcement message that enabled obtaining said lowest route cost is a radio-frequency communication interface, the relay agent enters in its local routing table at the data link layer of the OSI model the fact that the routing of the messages coming from or going to said smart electricity meter takes place via said radio-frequency communication interface.

3. Method according to any one of claims 1 and 2, **characterised in that** the data link layer of the OSI model of each gateway is broken down into a set of medium access control sublayers (722, 723) specific to said communication interfaces of said gateway and an adaptation sublayer (721) interfacing the network layer of the OSI model with the medium access control sublayers, the routing of messages in the system being performed by said gateway at the adaptation sublayer.

4. Method according to claim 3, **characterised in that** each of the medium access control sublayers (722, 723) implements the same medium access control mechanism for communicating between neighbours, a packet fragmentation and reassembly mechanism, an automatic request repetition mechanism and a continuous medium listening mechanism when said gateway is not transmitting on the medium in question.

5. Method according to any one of claims 3 and 4, **characterised in that** the routing of messages in the system taking place via the adaptation sublayer is in accordance with the 6LoWPAN protocol.

6. Method according to any one of claims 1 to 5, **characterised in that**, when furthermore the communication interface via which the relay agent sent the announcement message that enabled obtaining said lowest route cost is one said radio-frequency communication interface, said smart electricity meter establishes with the relay agent a first monitoring mechanism consisting of exchanging, via said radio-frequency communication interface, radio connectivity check messages, and said smart electricity meter reinitiates the registration phase when the first monitoring mechanism shows a loss of radio connectivity.

7. Method according to any one of claims 1 to 6, **characterised in that**, when furthermore the communication interface via which the relay agent sent the announcement message that enabled obtaining the lowest route cost is one said radio-frequency communication interface, said smart electricity meter establishes with the relay agent a second monitoring mechanism consisting of exchanging with the centralised management device keep-alive messages and/or other application messages, and **in that** said smart electricity meter reinitiates the registration phase when the second monitoring mechanism shows a loss of contact with the centralised management device.

8. Smart electricity meter (116) intended to be used in a system comprising a powerline communication network with reactive routing protocol for putting in contact nodes in the system and a centralised management device (110) of the system with which smart electricity meters (111, 112, 113, 114, 115) that are nodes in the system shall be registered, each path between one said node in the system and the centralised management device consisting of a link or a set of links, each link being associated with a route cost,
the system comprising at least one gateway (120, 121) comprising a powerline communication interface for communicating via the powerline communication network and at least one radio-frequency communication interface,
said smart electricity meter, seeking to connect to the system and also comprising a powerline communication interface and at least one radio-frequency communication interface, comprising means for performing a registration phase comprising:
- means for broadcasting (302, 303) an announcement request message on each of its communication interfaces;
- means for, after reception of one or more announcement messages in response to the announcement request message from respectively one or more neighbours in the system, selecting (307) a relay agent, the relay agent being the neighbour in the system having the lowest route cost for joining the centralised management device, each announcement message including information on route cost between the neighbour that sent said announcement message and the centralised management device; and
- means for making (308, 309) a request for registration of said smart electricity meter with the centralised management device, using the selected relay agent as a proxy via the communication interface via which the relay agent sent the announcement message that enabled obtaining said lowest route cost;
the system being further **characterised in that** the route costs of links relying on powerline communication interfaces and radio-frequency communication links are defined so as to be consistent with each other,
and **in that**, after registration of said smart electricity meter, the routing of messages coming from or going to said smart electricity meter takes place at the data link layer (702) of the OSI model,
and **in that**, when said smart electricity meter is registered in the system and furthermore the communication interface via which the relay agent sent the announcement message that enabled obtaining the lowest route cost is the powerline communication interface, means for adopting the role of gateway in the system, and
and, when said smart electricity meter is registered in the system and furthermore the communication interface via which the relay agent sent the announcement message that enabled obtaining the lowest route cost is one said radio-frequency communication interface, means for not responding to any announcement request messages coming from other smart electricity meters.

9. Computer program product, **characterised in that** it comprises instructions causing execution of the method according to any one of claims 1 to 7, when said instructions are executed by a processor.

10. Information storage medium, **characterised in that** it stores a computer program comprising instructions causing execution of the method according to any one of claims 1 to 7, when said instructions are executed by a processor.
